# EUROPEAN PATENT APPLICATION

(11) **EP 4 852 360 A1**
(43) Date of publication of application: **09.12.2026**
(21) Application number: 24925556.3
(22) Date of filing: 28.10.2024
(51) Int. Cl.: H04L 5/00

(54) **COMMUNICATION METHOD AND COMMUNICATION APPARATUS**

(30) Priority: 19.02.2024 CN 202410188624
(71) Applicant: HUAWEI TECHNOLOGIES CO., LTD., Shenzhen, Guangdong 518129 (CN)
(72) Inventor: QIN, Cheng, Shenzhen, Guangdong 518129 (CN); YANG, Rui, Shenzhen, Guangdong 518129 (CN); WANG, Sihai, Shenzhen, Guangdong 518129 (CN)
(74) Representative: Huawei European IPR
(86) International application number: PCT/CN2024/127781
(87) International publication number: WO 2025/175818

(57) **Abstract**

This application provides a communication method and a communication apparatus. In the communication method, a network device may send first indication information to a terminal device, where the first indication information indicates the terminal device to send a first AI preamble; the terminal device may send the first AI preamble to the network device based on the first indication information; the network device may receive a first signal including the first AI preamble; and the network device may monitor an AI model by using the first AI preamble. In this way, a problem in AI model monitoring can be resolved.

## Description

This application claims priority to Chinese Patent Application No. 202410188624.4, filed with the China National Intellectual Property Administration on February 19, 2024 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus in the communication field.

### BACKGROUND

In existing communication systems, artificial intelligence (artificial intelligence, AI) models may be introduced in some scenarios, for example, in channel state information (channel state information, CSI) feedback scenarios. When using an AI model, a communication device needs to monitor accuracy of the AI model. Since inaccuracy of the AI model may cause poor system performance, how to monitor accuracy of the AI model is an urgent problem to be resolved, especially when the AI model is introduced in a random access procedure.

### SUMMARY

Embodiments of this application provide a communication method and a communication apparatus, to monitor accuracy of an AI model used for random access.

According to a first aspect, a communication method is provided, including: sending first indication information, where the first indication information indicates to send a first artificial intelligence AI preamble, and the first AI preamble is used for AI model monitoring; and receiving a first signal including the first AI preamble.

In the foregoing solution, a network device may send the first indication information to a terminal device, where the first indication information indicates the terminal device to send a first AI preamble. The terminal device may send the first AI preamble to the network device based on the first indication information. The network device may receive a first signal including the first AI preamble. The network device may monitor an AI model by using the first AI preamble. In this way, a problem of monitoring the AI model can be resolved.

Optionally, the first AI preamble is used for AI model monitoring and/or AI model training. In other words, the first AI preamble is a preamble dedicated to AI model monitoring and/or AI model training. Optionally, the AI model is used by the network device to detect an AI preamble from the terminal device, and/or the AI model is used to generate a first AI preamble set.

Optionally, the network device may send the first indication information by using DCI, an RRC message, or a MAC-CE message.

In some possible implementations, the communication method further includes: sending first configuration information, where the first configuration information is used to configure a first time-frequency resource for sending the first AI preamble; and the receiving the first signal including the first AI preamble further includes: receiving the first signal on the first time-frequency resource, where the first time-frequency resource is used for AI model monitoring and/or AI model training.

In the foregoing solution, the network device may send the first configuration information used to configure the first time-frequency resource for sending the first AI preamble, so that the terminal device sends, on the first time-frequency resource, the first signal including the first AI preamble. This avoids a case in which the terminal device does not know a specific time-frequency resource on which the first signal including the first AI preamble is to be sent.

Optionally, the first AI preamble is used for AI model monitoring, and the first time-frequency resource is used for AI model monitoring; the first AI preamble is used for AI model training, and the first time-frequency resource is used for AI model training; or the first AI preamble is used for AI model monitoring and AI model training, and the first time-frequency resource is used for AI model monitoring and AI model training.

Optionally, the sending the first configuration information includes: sending the first configuration information by using DCI, an RRC message, a MAC-CE message, or a broadcast message.

In some possible implementations, the communication method further includes: receiving first capability information, where the first capability information indicates a time-frequency resource range supported by the terminal device, and the time-frequency resource range includes the first time-frequency resource.

In the foregoing solution, the network device may receive the first capability information from the terminal device, where the first capability information indicates the time-frequency resource range supported by the terminal device, from which the first time-frequency resource for sending the first AI preamble is determined.

Optionally, the first capability information may indicate at least one of a time domain length, a frequency domain length, an amplitude range, or a phase range, to indicate the time-frequency resource range supported by the terminal device. Optionally, the time-frequency resource range supported by the terminal device may be a time-frequency resource range supported by the terminal device when sending an AI preamble, or may be a time-frequency resource range supported by the terminal device when generating an AI preamble.

In some possible implementations, the communication method further includes: receiving second capability information, where the second capability information indicates an AI preamble that can be generated by the terminal device; and determining the first AI preamble from the AI preamble that can be generated by the terminal device.

In the foregoing solution, the network device may receive the second capability information from the terminal device, and the network device may determine, from the AI preamble that can be generated by the terminal device, the first AI preamble to be sent by the terminal device, to avoid a case in which the network device does not know how to determine an AI preamble to be sent by the terminal device.

In some possible implementations, the first AI preamble set is determined by using the AI model, the first AI preamble set includes the AI preamble that can be generated by the terminal device, and the AI preamble that can be generated by the terminal device includes the first AI preamble.

Optionally, the first AI preamble set is dedicated to AI model monitoring, the first AI preamble set is dedicated to AI model training, or the first AI preamble set is dedicated to AI model monitoring and AI model training. The first AI preamble set is determined by using the AI model. Optionally, the AI model may include a first AI submodel for generating the first AI preamble set. In this way, the terminal device or the network device may determine the first AI preamble set based on the first AI submodel. In other words, the AI model may include the first AI submodel used for generation of the first AI preamble set and the second AI submodel used for AI preamble detection. The terminal device or the network device may generate the first AI preamble set based on the first AI submodel, and the network device may detect, based on the second AI submodel, the first AI preamble sent by the terminal device. Optionally, the AI model includes the first AI preamble set and the second AI submodel, and the second AI submodel is used for AI preamble detection. In other words, the AI model may include the first AI preamble set and the second AI submodel that is used for AI preamble detection. The network device may perform AI preamble detection based on the second AI submodel.

In some possible implementations, the communication method further includes: receiving third capability information, where the third capability information indicates whether the terminal device supports auxiliary AI model monitoring and/or auxiliary AI model training; and the sending the first indication information includes: sending the first indication information when the third capability information indicates that the terminal device supports auxiliary AI model monitoring and/or auxiliary AI model training.

In the foregoing solution, the terminal device may send the third capability information to the network device to indicate whether the terminal device supports auxiliary AI model monitoring and/or AI model training. When the terminal device supports auxiliary AI model monitoring, the network device may send the first indication information. In this case, the first AI preamble is used for AI model monitoring. When the terminal device supports auxiliary AI model training, the network device may send the first indication information. In this case, the first AI preamble is used for AI model training.

In some possible implementations, the communication method further includes: sending second configuration information, where the second configuration information indicates a first time domain offset and/or first frequency domain offset for sending the first AI preamble by the terminal device; and the receiving the first signal including the first AI preamble includes: receiving, based on the first time domain offset and/or the first frequency domain offset, the first signal including the first AI preamble.

In the foregoing solution, the network device may send the second configuration information to the terminal device to configure the first time domain offset and/or first frequency domain offset for sending the first AI preamble. The terminal device sends, based on the first time domain offset and/or the first frequency domain offset, the first signal including the first AI preamble. The network device may receive, based on the first time domain offset and/or the first frequency domain offset, the first signal including the first AI preamble.

Optionally, the second configuration information indicates the terminal device to generate and send the first time domain offset and/or the first frequency domain offset of the first AI preamble.

Optionally, the network device may send the second configuration information by using an RRC message, and the terminal device may receive the second configuration information by using the RRC message. Optionally, the network device may send the second configuration information by using a broadcast message, and the terminal device may receive the second configuration information by using the broadcast message. Optionally, the network device may send the second configuration information by using DCI, and the terminal device may receive the second configuration information by using the DCI. Optionally, the network device may send the second configuration information by using a MAC-CE message, and the terminal device may receive the second configuration information by using the MAC-CE message.

In some possible implementations, before the sending the second configuration information, the method further includes: receiving fourth capability information, where the fourth capability information indicates a time domain offset range and/or frequency domain offset range supported by the terminal device when sending the AI preambles, the time domain offset range includes the first time domain offset, and the frequency domain offset range includes the first frequency domain offset.

In the foregoing solution, the terminal device may report a time-frequency offset range supported by the terminal device when performing AI preamble sending, and the network device may determine, in the time-frequency offset range, the first time domain offset for sending the first AI preamble by the terminal device; and/or the terminal device may report a frequency domain offset range supported by the terminal device when performing AI preamble sending, and the network device may determine, in the frequency domain offset range, the first frequency domain offset for sending the first AI preamble by the terminal device.

In some possible implementations, the first indication information indicates the terminal device to send the first AI preamble in a radio resource control RRC connected state.

In the foregoing solution, the terminal device may send the first AI preamble in the RRC connected state based on the first indication information. In this way, the terminal device may simulate a real scenario in which the first AI preamble is sent, so that the network device can perform AI model monitoring and/or AI model training by using the first AI preamble.

According to a second aspect, a communication method is provided, including: receiving first indication information, where the first indication information indicates to send a first artificial intelligence AI preamble, and the first AI preamble is used for AI model monitoring; and sending, based on the first indication information, a first signal including the first AI preamble.

In the foregoing solution, a terminal device may receive the first indication information, where the first indication information indicates the terminal device to send a first AI preamble. The terminal device may send the first AI preamble to a network device based on the first indication information. The network device may receive a first signal including the first AI preamble. The network device may monitor an AI model by using the first AI preamble. In this way, a problem of monitoring the AI model can be resolved.

Optionally, the first AI preamble is used for AI model monitoring and/or AI model training. In other words, the first AI preamble is a preamble dedicated to AI model monitoring and/or AI model training. Optionally, the AI model is used by the network device to detect an AI preamble from the terminal device, and/or the AI model is used to generate a first AI preamble set.

In some possible implementations, the communication method further includes: receiving first configuration information, where the first configuration information is used to configure a first time-frequency resource for sending the first AI preamble; and the sending, based on the first indication information, the first signal including the first AI preamble includes: sending the first signal comprising the first AI preamble on the first time-frequency resource indicated by the first configuration information, where the first time-frequency resource is used for AI model monitoring and/or AI model training.

In some possible implementations, the communication method further includes: sending first capability information, where the first capability information indicates a time-frequency resource range supported by the terminal device, and the time-frequency resource range includes the first time-frequency resource.

In some possible implementations, the communication method further includes: sending second capability information, where the second capability information indicates an AI preamble that can be generated by the terminal device, where the AI preamble that can be generated by the terminal device includes the first AI preamble.

In some possible implementations, the first AI preamble set is determined by using the AI model, the first AI preamble set includes the AI preamble that can be generated by the terminal device, and the AI preamble that can be generated by the terminal device includes the first AI preamble. The AI preamble included in the first AI preamble set is used for AI model monitoring and/or AI model training.

In some possible implementations, before the receiving first indication information, the communication method further includes: sending third capability information, where the third capability information further indicates whether the terminal device supports auxiliary AI model monitoring or auxiliary AI model training.

In some possible implementations, the communication method further includes: receiving second configuration information, where the second configuration information indicates a first time domain offset and/or first frequency domain offset for sending the first AI preamble by the terminal device; and the sending, based on the first indication information, the first signal including the first AI preamble includes: sending, based on the first time domain offset and/or the first frequency domain offset, the first signal including the first AI preamble.

In some possible implementations, the communication method further includes: sending fourth capability information, where the fourth capability information indicates a time domain offset range and/or frequency domain offset range supported by the terminal device when sending the AI preambles, where the time domain offset range includes the first time domain offset, and the frequency domain offset range includes the first frequency domain offset.

In some possible implementations, the first indication information indicates to send the first artificial intelligence AI preamble in a radio resource connection control RRC connected state; and the sending, based on the first indication information, the first signal including the first AI preamble includes: sending, in the RRC connected state based on the first indication information, the first signal including the first AI preamble.

Specifically, for descriptions of the second aspect, refer to the descriptions of the first aspect. To avoid repetition, details are not described.

According to a third aspect, a communication method is provided, including: receiving first configuration information, where the first configuration information is used to configure monitoring of information about artificial intelligence AI preamble sending; and sending first information based on the first configuration information, where the first information includes the information about AI preamble sending.

In the foregoing solution, a terminal device may receive the first configuration information sent by a network device to the terminal device to configure information about AI preamble sending by the terminal device; the terminal device may send the first information based on the first configuration information from the network device, where the first information includes the information about AI preamble sending by the terminal device; and the network device may perform AI model monitoring or AI model training based on the first information, to monitor or train the AI model used for random access.

Optionally, the first configuration information is used to configure the terminal device to monitor information about AI preamble sending by the terminal device.

Alternatively, the first configuration information is used to configure the terminal device to record information about AI preamble sending by the terminal device.

Optionally, the terminal device may receive the first configuration information by using a SIB message.

In some possible implementations, the first configuration information is used to configure monitoring of information about AI preamble sending in a first time window; and
the first information includes the information about AI preamble sending in the first time window.

In the foregoing solution, the terminal device may monitor, based on the first configuration information, the information about AI preamble sending by the terminal device in the first time window, to send, to the network device, the first information including the information about AI preamble sending by the terminal device in the first time window.

Optionally, the first configuration information is used to configure the terminal device to monitor information about AI preamble sending by the terminal device in a first time window. In this way, the terminal device may monitor the information about AI preamble sending by the terminal device in the first time window, to report, to the network device, information about AI preamble sending by the terminal device in the first time window.

Optionally, the first configuration information is used to configure the terminal device to monitor information about a success of AI preamble sending by the terminal device in the first time window and information about a failure of AI preamble sending by the terminal device in the first time window. In this way, the terminal device may monitor information about a success of AI preamble sending by the terminal device in the first time window and information about a failure of AI preamble sending by the terminal device in the first time window, to report, to the network device, the information about the success of AI preamble sending by the terminal device in the first time window and the information about the failure of AI preamble sending by the terminal device in the first time window.

In some possible implementations, the first configuration information is used to configure monitoring of information about an AI preamble sending failure in the first time window, and the first information includes the information about the AI preamble sending failure in the first time window.

In the foregoing solution, the terminal device may monitor, based on the first configuration information, the information about the failure of AI preamble sending by the terminal device in the first time window, where the first information may include information about the failure of AI preamble sending by the terminal device in the first time window.

In some possible implementations, the first configuration information is used to configure monitoring of at least one of a quantity of AI preamble sending failures, an identifier of an AI preamble that fails to be sent, a sending time of an AI preamble that fails to be sent, or a transmit power of an AI preamble that fails to be sent in the first time window; and
the first information includes the at least one of the quantity of AI preamble sending failures, the identifier of the AI preamble that fails to be sent, the sending time of the AI preamble that fails to be sent, or the transmit power of the AI preamble that fails to be sent in the first time window.

In the foregoing solution, the terminal device may monitor at least one of a quantity of AI preamble sending failures, an identifier of an AI preamble that fails to be sent, a sending time of an AI preamble that fails to be sent, or a transmit power of an AI preamble that fails to be sent, and send the first information including the at least one of the quantity of failures of AI preamble sending by the terminal device, the identifier of the AI preamble that fails to be sent, the sending time of the AI preamble that fails to be sent, or the transmit power of the AI preamble that fails to be sent in the first time window.

In some possible implementations, the first configuration information is used to configure monitoring of information about an AI preamble sending failure, and the first information includes the information about the AI preamble sending.

In the foregoing solution, the terminal device may send, based on the first configuration information, the first information including the information about AI preamble sending by the terminal device, so that the network device can perform AI model monitoring and/or AI model training based on the first information.

In some possible implementations, the first configuration information is used to configure the terminal device to record at least one of a quantity of AI preamble sending failures, an identifier of an AI preamble that fails to be sent, a sending time of an AI preamble that fails to be sent, or a transmit power of an AI preamble that fails to be sent, where the first information includes the at least one of the quantity of failures of AI preamble sending, the identifier of the AI preamble that fails to be sent, the sending time of the AI preamble that fails to be sent, or the transmit power of the AI preamble that fails to be sent in the at least one time of AI preamble sending.

In the foregoing solution, the terminal device may monitor at least one of a quantity of AI preamble sending failures, an identifier of an AI preamble that fails to be sent, a sending time of an AI preamble that fails to be sent, or a transmit power of an AI preamble that fails to be sent, and send the first information including the at least one of the quantity of failures of AI preamble sending by the terminal device, the identifier of the AI preamble that fails to be sent, the sending time of the AI preamble that fails to be sent, or the transmit power of the AI preamble that fails to be sent.

In some possible implementations, the communication method further includes: receiving second configuration information, where the second configuration information is used to configure to send the first information upon N AI preamble sending failures; and the sending the first information based on the first configuration information includes: sending the first information upon the N AI preamble sending failures, where N is a positive integer.

In the foregoing solution, the terminal device may send the first information based on the second configuration information upon the N AI preamble sending failures. This prevents the terminal device from reporting a small quantity of AI preamble sending failures caused by occasional fluctuation as a monitoring result to the network device, and causing inaccurate monitoring information of the network device.

Optionally, the terminal device may receive the second configuration information by using a SIB message.

In some possible implementations, the second configuration information is specifically used to configure the terminal device to send, upon the N AI preamble sending failures, the first information after entering a radio resource control RRC connected state via a non-AI preamble; and the sending the first information upon the N AI preamble sending failures includes: sending, upon the N AI preamble sending failures, the first information after entering the RRC connected state via the non-AI preamble.

In the foregoing solution, the terminal device may send, based on the second configuration information upon N AI preamble failures, the first information after entering the RRC connected state via the non-AI preamble, to avoid a case in which the terminal device cannot enter the RRC connected state and cannot send the first information, as a result, the network device cannot perform AI model monitoring and/or AI model training.

In some possible implementations, the sending the first information after entering the RRC connected state via the non-AI preamble includes: if the AI preamble belongs to a first AI preamble set, sending the first information after entering the RRC connected state via a first-type non-AI preamble; or if the AI preamble belongs to a second AI preamble set, sending the first information after entering the RRC connected state via a second-type non-AI preamble, where an intersection set of the first AI preamble set and the second AI preamble set is empty.

In some possible implementations, the communication method further includes: receiving a first request message; and the sending the first information based on the first configuration information includes: sending the first information based on the first configuration information in response to the first request message.

In the foregoing solution, the terminal device may send the first information based on the first request message from the network device, to avoid a case in which the terminal device does not know when to send the first information.

Optionally, the terminal device may receive the first request message after the terminal device is in the RRC connected state. In other words, the terminal device may store the first information after recording the first information, and the terminal device may send the first information to the network device after receiving the first request message in the RRC connected state.

In some possible implementations, the communication method further includes: sending a second request message; and receiving a response message of the second request message; and the sending the first information based on the first configuration information includes: sending the first information based on the first configuration information and the response message of the second request message.

In the foregoing solution, the terminal device may actively request, by using the second request message, the network device to send the first information. After the network device sends the response message of the second request message, it indicates that the network device authorizes the terminal device to send the first information, and the terminal device may send the first information to the network device based on the response message of the second request message.

Optionally, the terminal device may send the second request message to the network device in the RRC connected state, and the terminal device may receive, in the RRC connected state, a response message of the second request message sent by the network device, and send the first information to the network device in the RRC connected state.

According to a fourth aspect, a communication method is provided, including: sending first configuration information, where the first configuration information is used to configure monitoring of information about artificial intelligence AI preamble sending; and receiving first information sent based on the first configuration information, where the first information includes the information about AI preamble sending.

In the foregoing solution, a network device may send the first configuration information to configure information about AI preamble sending by a terminal device; the terminal device may send the first information based on the first configuration information from the network device, where the first information includes the information about AI preamble sending by the terminal device; and the network device may perform AI model monitoring or AI model training based on the first information, to monitor or train the AI model used for random access.

In some possible implementations, the first configuration information is used to configure monitoring of information about AI preamble sending in a first time window, and the first information includes the information about AI preamble sending in the first time window.

In some possible implementations, the first configuration information is used to configure monitoring of information about an AI preamble sending failure in the first time window, and the first information includes the information about the AI preamble sending failure in the first time window.

In some possible implementations, the first configuration information is used to configure monitoring of at least one of a quantity of AI preamble sending failures, an identifier of an AI preamble that fails to be sent, a sending time of an AI preamble that fails to be sent, or a transmit power of an AI preamble that fails to be sent in the first time window; and
the first information includes the at least one of the quantity of AI preamble sending failures, the identifier of the AI preamble that fails to be sent, the sending time of the AI preamble that fails to be sent, or the transmit power of the AI preamble that fails to be sent in the first time window.

In some possible implementations, the first configuration information is used to configure the terminal device to monitor the information about the failure of AI preamble sending by the terminal device; and the first information includes the information about the AI preamble sending failure.

In some possible implementations, the first configuration information is used to configure the terminal device to monitor at least one of a quantity of AI preamble sending failures, an identifier of an AI preamble that fails to be sent, a sending time of an AI preamble that fails to be sent, or a transmit power of an AI preamble that fails to be sent; and
the first information includes the at least one of the quantity of AI preamble sending failures, the identifier of the AI preamble that fails to be sent, the sending time of the AI preamble that fails to be sent, or the transmit power of the AI preamble that fails to be sent in the at least one time of AI preamble sending.

In some possible implementations, the communication method further includes: sending second configuration information, where the second configuration information is used to configure to send the first information upon N AI preamble sending failures, and N is a positive integer.

In some possible implementations, the second configuration information is specifically used to configure to send, upon the N AI preamble sending failures, the first information after entering an RRC connected state via a non-AI preamble.

In some possible implementations, the communication method further includes: sending a first request message; and the receiving the first information includes: receiving the first information sent based on the first request message.

In some possible implementations, the communication method further includes: receiving a second request message; and sending a response message of the second request message; and the receiving the first information includes: receiving the first information based on the response message of the second request message.

Specifically, for descriptions of the fourth aspect, refer to the descriptions of the third aspect. To avoid repetition, details are not described.

According to a fifth aspect, a communication method is provided, including: sending first configuration information, where the first configuration information is used to configure a terminal device to send a non-AI preamble upon M artificial intelligence AI preamble sending failures.

M is a positive integer.

In the foregoing solution, when a network device may send the first configuration information, and the terminal device fails to perform AI preamble sending M times, that is, the terminal device attempts to perform random access by using the AI preamble, and M attempts fail, it indicates that the AI preamble may not be used for random access. Therefore, the terminal device may fall back to a non-AI preamble, and may attempt to perform random access by using the non-AI non-preamble, to avoid a waste of signaling or an excessively long access delay caused by an access failure due to continuous random access performed by the terminal device by using the AI preamble.

Optionally, the first configuration information may be sent by using a broadcast message.

According to a sixth aspect, a communication method is provided, including: receiving first configuration information, where the first configuration information is used to configure a terminal device to send a non-AI preamble upon M artificial intelligence AI preamble sending failures; and sending, based on the first configuration information, the non-AI preamble upon the M artificial intelligence AI preamble sending failures, where M is a positive integer.

In the foregoing solution, when the terminal device fails to perform AI preamble sending M times, that is, the terminal device attempts to perform random access by using the AI preamble, and M attempts fail, it indicates that the AI preamble may not be used for random access. Therefore, the terminal device may fall back to a non-AI preamble, and may attempt to perform random access by using the non-AI non-preamble, to avoid a waste of signaling or an excessively long access delay caused by an access failure due to continuous random access performed by the terminal device by using the AI preamble.

According to a seventh aspect, a communication apparatus is provided. The communication apparatus has a function of implementing any one of the foregoing aspects. The function may be implemented by hardware, or may be implemented by executing corresponding software by hardware. The hardware or the software includes one or more modules or units corresponding to the foregoing function, for example, a transceiver module or unit, a processing module or unit, or an obtaining module or unit.

According to an eighth aspect, an embodiment of this application provides a communication apparatus, including a memory and a processor. The memory is configured to store a computer program, and the processor is configured to cause, when invoking the computer program, the communication apparatus to perform the communication method in any one of the foregoing aspects.

According to a ninth aspect, an embodiment of this application provides a chip system, and the chip system includes a processor. The processor is coupled to a memory, and the processor executes a computer program stored in the memory, to implement the communication method in any one of the foregoing aspects.

The chip system may be a single chip or a chip module including a plurality of chips.

According to a tenth aspect, an embodiment of this application provides a computer-readable storage medium. The computer-readable storage medium stores a computer program, and when the computer program is executed by a processor, the communication method in any one of the foregoing aspects is implemented.

According to an eleventh aspect, an embodiment of this application provides a computer program product. When the computer program product runs on a communication apparatus, the communication apparatus is caused to perform the communication method in any one of the foregoing aspects.

It may be understood that, for beneficial effects of the seventh aspect to the eleventh aspect, refer to the related descriptions of the foregoing aspects. Details are not described herein again.

### BRIEF DESCRIPTION OF DRAWINGS

FIG. 1 is a diagram of a communication system according to an embodiment of this application;
FIG. 2 is a diagram of a communication method according to an embodiment of this application;
FIG. 3 is a diagram of another communication method according to an embodiment of this application;
FIG. 4 is a diagram of AI preamble sending according to an embodiment of this application;
FIG. 5 is another diagram of AI preamble sending according to an embodiment of this application;
FIG. 6 is a diagram of a first time window according to an embodiment of this application;
FIG. 7 is a diagram of another first time window according to an embodiment of this application;
FIG. 8 is still another diagram of AI preamble sending according to an embodiment of this application;
FIG. 9 is still another diagram of AI preamble sending according to an embodiment of this application;
FIG. 10 is a diagram of still another communication method according to an embodiment of this application;
FIG. 11 is a diagram of a communication apparatus according to an embodiment of this application; and
FIG. 12 is a diagram of another communication apparatus according to an embodiment of this application.

### DESCRIPTION OF EMBODIMENTS

It should be understood that, division into manners, cases, categories, and embodiments in embodiments of this application is merely for ease of description, and should not constitute a special limitation. Features in various manners, categories, cases, and embodiments may be combined without contradiction.

It should be further understood that "first", "second", and "third" in embodiments of this application are merely for distinguishing, and should not constitute any limitation on this application. It should be further understood that, in embodiments of this application, sequence numbers of processes do not mean execution sequences. The execution sequences of the processes should be determined based on functions and internal logic of the processes, and shall not constitute any limitation on implementation processes of embodiments of this application.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one of a, b, or c indicates a, b, c, a and b, a and c, b and c, or a, b, and c, where a, b, and c may be singular or plural.

In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the term "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the term such as "example" or "for example" is intended to present a related concept in a specific manner.

A method and an apparatus provided in embodiments of this application are based on a same or similar technical concept. Because problem solving principles of the method and the apparatus are similar, mutual reference may be made to implementations of the apparatus and the method. Repeated descriptions are not described.

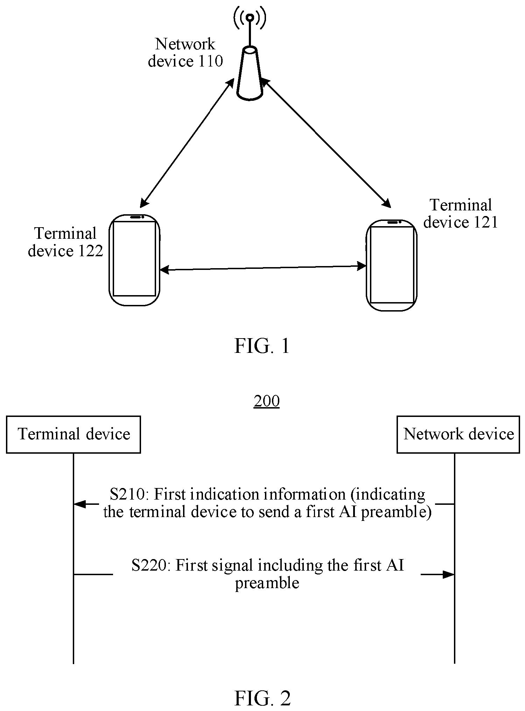

FIG. 1 is a diagram of a communication system to which embodiments of this application are applicable. As shown in FIG. 1, the wireless communication system may include a network device 110 and one or more terminal devices (for example, a terminal device 121 and a terminal device 122 shown in FIG. 1) for communication. When the network device 110 sends a signal, the network device 110 is a transmit end, and the terminal device 121 or the terminal device 122 is a receive end. On the contrary, when the terminal device 121 or the terminal device 122 sends a signal, the terminal device 121 or the terminal device 122 is a transmit end, and the network device 110 is a receive end. Optionally, the terminal device 121 may also communicate with the terminal device 122. When the terminal device 121 sends a signal to the terminal device 122, the terminal device 121 is a transmit end, and the terminal device 122 is a receive end. On the contrary, when the terminal device 122 sends a signal to the terminal device 121, the terminal device 122 is a transmit end, and the terminal device 121 is a receive end.

The terminal device 121 or the terminal device 122 may also be referred to as a terminal, user equipment (user equipment, UE), a mobile station (mobile station, MS), a mobile terminal (mobile terminal, MT), a road side unit (road side unit, RSU), or the like. The terminal device in embodiments of this application may be a mobile phone (mobile phone), a tablet computer (Pad), a computer with a wireless transceiver function, a wearable device, a vehicle, an unmanned aerial vehicle, a helicopter, an aircraft, a ship, a robot, a robotic arm, a smart home device, a sound box, or the like, or may be a wireless terminal used in scenarios such as device-to-device (device-to-device, D2D), vehicle-to-everything (vehicle-to-everything, V2X) communication, machine type communication (machine type communication, MTC), Internet of Things (Internet of things, IoT), virtual reality (virtual reality, VR), augmented reality (augmented reality, AR), industrial control (industrial control), self-driving (self-driving), telemedicine (remote medical), smart grid (smart grid), transportation safety (transportation safety), smart city (smart city), smart wearables, smart transportation, and smart home (smart home). In this application, the terminal device and a chip that can be used in the terminal device are collectively referred to as a terminal device. It should be understood that a specific technology and a specific device form used by the terminal device are not limited in embodiments of this application.

The network device 110 may be a device in a wireless network, and the network device 110 may also be referred to as a network apparatus. For example, the network device 110 may be a radio access network (radio access network, RAN) node that connects the terminal device to the wireless network, and may also be referred to as an access network device. The network device 110 includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home NodeB (for example, a home evolved NodeB, or a home NodeB, HNB), a baseband unit (baseband unit, BBU), an access point (access point, AP) in a wireless fidelity (wireless fidelity, Wi-Fi) system, a radio relay node, a radio backhaul node, and a transmission point (transmission point, TP), a reception point (reception point, RP), a transmission and reception point (transmission and reception point, TRP), or the like, or may be a network device in a 5G mobile communication system or a network device in another future network system, for example, a next generation NodeB (next generation NodeB, gNB), a transmission reception point (transmission reception point, TRP), or a TP in an NR system, or one antenna panel or one group of antenna panels (including a plurality of antenna panels) of a base station in the 5G mobile communication system. Alternatively, the network device 110 may be a network node that forms a gNB or a transmission point, for example, a BBU or a distributed unit (distributed unit, DU).

In some deployments, the network device 110 may include a central unit (central unit, CU) and a distributed unit (distributed unit, DU). The network device 110 may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer. The DU is responsible for processing a physical layer protocol and a real-time service, and implements functions of a radio link control (radio link control, RLC) layer, a media access control (media access control, MAC) layer, and a physical (physical, PHY) layer. In some deployments, the CU may be further divided into a central unit control plane (central unit control plane, CU-CP) node and a central unit user plane (central unit user plane, CU-UP) node. The CU-CP is responsible for the control plane function, and the CU-UP is responsible for the user plane function. For example, the CU-CP and the CU-UP may be implemented by different functional entities, and are connected through an E1 interface. The CU-CP and the CU-UP may be coupled to the DU, to jointly perform functions of the base station. The CU control plane, that is, the CU-CP, may further include an architecture in which the CU-CP is further divided. To be specific, the existing CU-CP is further divided into a CU-CP 1 and a CU-CP 2. The CU-CP 1 includes various radio resource management functions, and the CU-CP 2 includes only a radio resource control (radio resource control, RRC) function and a PDCP-C function (that is, a basic function of control plane signaling at a packet data convergence protocol (packet data convergence protocol, PDCP) layer).

The communication system shown in FIG. 1 may be used in a 4G, 5G, 6G, future communication system, or the like. This is not limited in embodiments of this application.

For ease of description, device numbers are omitted in the following embodiments. For example, a "terminal device" represents the "terminal device 121 or terminal device 122", and a "network device" represents the "network device 110".

In embodiments of this application, the terminal device and the network device are used as an example for description. In actual application, embodiments of this application may be further applied to another scenario, for example, a satellite communication scenario.

In an existing communication system, an artificial intelligence (artificial intelligence, AI) model may be introduced in some scenarios. For example, an AI model may be introduced in channel state information (channel state information, CSI) feedback. When using an AI model, a communication device needs to monitor accuracy of the AI model. Since inaccuracy of the AI model may cause poor system performance, how to monitor accuracy of the AI model is an urgent problem to be resolved. In a possible implementation, in a scenario in which an AI CSI model is introduced in CSI feedback, an output result of the AI CSI model may be compared with an expected output result. If the output result of the AI CSI model greatly differ from the expected output result, it indicates that performance of the AI CSI model is poor. When the network device monitors the AI CSI model, the terminal device needs to send original information to the network device, and the network device compares the output result of the AI CSI model with the original information, to determine performance of the AI CSI model. When the terminal device monitors the AI CSI model, the network device needs to send original information to the terminal device, and the terminal device compares the output result of the AI CSI model with the original information, to determine performance of the AI CSI model. However, in the process of monitoring the AI CSI model, the network device or the terminal device needs to send the original information, resulting in high overheads.

In the existing communication system, the terminal device may access the network device in a random access manner, and communicate with the network device. During random access, the terminal device may send a preamble (preamble), and the network device may detect the preamble of the terminal device. In a conventional technology, preambles may be generated based on ZC (Zadoff-Chu) sequences. When different root sequences are used, the generated preambles are non-orthogonal. When a plurality of terminal devices send different preambles on a same time-frequency resource, the different preambles interfere with each other, resulting in detection performance degradation. In addition, when the network device detects a preamble, the network device may perform a correlation operation based on a local sequence and a signal received by the network device, and compare a result of the correlation operation with a threshold, to determine whether a specific preamble is detected. However, the threshold cannot meet all usage scenarios. For example, if a same threshold is used in a scenario with a small quantity of terminal devices and a scenario with a large quantity of terminal devices, detection accuracy cannot be met. Therefore, it is necessary to introduce an AI technology or an AI model in a random access procedure to improve detection performance in random access. However, after the AI technology is introduced, how to monitor accuracy of the AI model in the random access procedure is an urgent problem to be resolved.

In embodiments of this application, the network device may send first indication information to the terminal device, where the first indication information indicates the terminal device to send a first AI preamble. The terminal device may send the first AI preamble to the network device based on the first indication information. The network device may receive a first signal including the first AI preamble. The network device may monitor an AI model by using the first AI preamble. In this way, a problem of monitoring the AI model can be resolved.

A communication method 200 provided in an embodiment of this application is described below with reference to FIG. 2. As shown in FIG. 2, the communication method 200 includes the following steps.

S210: A network device sends first indication information, and a terminal device receives the first indication information, where the first indication information indicates the terminal device to send a first AI preamble (AI preamble).

Optionally, the first AI preamble is used for AI model monitoring or AI model training. In other words, the first AI preamble is dedicated to AI model monitoring or AI model training.

Optionally, the AI model is an AI model in an AI-based random access procedure. Optionally, in a first case, the AI model may include a first AI submodel used to generate a first AI preamble set and a second AI submodel used to detect an AI preamble. In this way, the terminal device or the network device may determine the first AI preamble set based on the first AI submodel. In other words, the AI model may include the first AI submodel used for generation of the first AI preamble set and the second AI submodel used for AI preamble detection. The terminal device or the network device may generate the first AI preamble set based on the first AI submodel, and the network device may perform AI preamble detection based on the second AI submodel. Optionally, the AI model is a dual-ended model. The second AI submodel is deployed on a receiving device side, for example, a network device side. The first AI submodel is deployed on a sending device side, for example, a terminal device side. The network device may jointly train the first AI submodel and the second AI submodel to obtain the AI model. Optionally, the network device may indicate, to the terminal device, the first AI preamble set generated by the network device based on the first AI submodel. Alternatively, the network device may indicate the first AI submodel to the terminal device, and the terminal device may generate the first AI preamble set based on the first AI submodel. In a second case, the AI model includes the first AI preamble set and the second AI submodel, and the second AI submodel is used for AI preamble detection. In other words, the AI model may include the first AI preamble set and the second AI submodel that is used for AI preamble detection. The network device may perform AI preamble detection based on the second AI submodel. Optionally, the AI model is a dual-ended model. The second AI submodel is deployed on a receiving device side, for example, a network device side. The first AI preamble set is deployed on a sending device side, for example, a terminal device side. The network device may jointly train the first AI preamble set and the second AI submodel to obtain the AI model. Optionally, the first AI preamble set is a part of model weight parameters in the dual-ended AI model obtained through training. Optionally, the network device may indicate the first AI preamble set to the terminal device. Optionally, in the two cases, there may be no intersection between the first AI preamble set and a second AI preamble set that is used for conventional AI-based random access. For example, there are a total of 64 AI preambles in a cell covered by the network device, and X AI preambles among the AI preambles are used for AI-based random access of the terminal device in the cell. In this case, the second AI preamble set includes the X AI preambles, where X is a positive integer. The first AI preamble set includes 64-X AI preambles, and the 64-X preambles are specially used for AI model monitoring or AI model training. Optionally, in the first case, the first AI submodel may be used to generate the first AI preamble set and the second AI preamble set. Optionally, in the second case, the AI model includes the first AI preamble set, the second AI preamble set, and the second AI submodel used for AI preamble detection.

Optionally, the first indication information indicates the terminal device to send the first AI preamble in an RRC connected state.

Optionally, the first indication information may indicate the terminal device to periodically send the first AI preamble.

Optionally, the first indication information may indicate the terminal device to periodically send the first AI preamble in an RRC connected state.

Optionally, the network device may send the first indication information by using a dynamic indication, a static indication, or a semi-static indication. For example, the DCI includes the first indication information, and the first indication information may indicate the terminal device to aperiodically send the first AI preamble. Optionally, the DCI may be a dedicated DCI indication, or may be a common DCI indication, for example, a group DCI indication. For another example, RRC signaling includes first indication information, and the first indication information may indicate the terminal device to send the first AI preamble and indicate a transmission periodicity for sending the first AI preamble by the terminal device. Optionally, the first indication information may indicate the terminal device to semi-statically or semi-persistently send the first AI preamble. For example, medium access control control element (medium access control control element, MAC-CE) signaling includes the first indication information, the first indication information is used to activate a periodicity preconfigured by the network device, and the terminal device may periodically send the first AI preamble.

Optionally, the network device may further send first configuration information, and the terminal device may receive the first configuration information. The first configuration information is used to configure a first time-frequency resource for sending the first AI preamble by the terminal device. For example, the first configuration information may indicate a subcarrier spacing (subcarrier space, SCS) corresponding to the first time-frequency resource. For another example, the first configuration information may directly indicate a position of the first time-frequency resource, for example, indicate a position of a time-frequency domain resource such as a resource unit (resource element, RE) or resource block in which the first time-frequency resource is located. For another example, the network device may preconfigure a time-frequency resource set, and the network device may indicate an index of the first time-frequency resource in the time-frequency resource set based on the first configuration information. The network device may send the first configuration information by using a dynamic indication, a static indication, or a semi-static indication. Optionally, the network device may send the first configuration information by using a radio resource control (radio resource control, RRC) message, and the terminal device may receive the first configuration information by using the RRC message. Optionally, the network device may send the first configuration information by using a broadcast message, for example, a system information block (system information block, SIB) message, and the terminal device may receive the first configuration information by using the broadcast message. Optionally, the network device may send the first configuration information by using DCI, and the terminal device may receive the first configuration information by using the DCI. The DCI may be dedicated DCI, or may be common DCI. Optionally, the network device may send the first configuration information by using MAC-CE signaling, and the terminal device may receive the first configuration information by using the MAC-CE signaling.

Optionally, the network device may send the first indication information and the first configuration information in one message, and the terminal device may receive the first indication information and the first configuration information from the message; or the network device may send the first indication information and the first configuration information in different messages, and the terminal device may obtain the first indication information and the first configuration information from the different messages. This is not limited in this embodiment of this application. Optionally, the first indication information may indicate the terminal device to send the first AI preamble, or may indicate the first time-frequency resource for sending the first AI preamble by the terminal device. In other words, one piece of information may indicate the terminal device to send the first AI preamble, and another piece of information may indicate the first time-frequency resource for sending the first AI preamble by the terminal device. Alternatively, one piece of information may indicate the terminal device to send the first AI preamble and indicate the first time-frequency resource for sending the first AI preamble by the terminal device. For example, the first indication information may indicate the first AI preamble and a first time domain resource, to be specific, the first indication information may indicate an index of the first AI preamble and an index of the first time domain resource in the preconfigured time-frequency resource set. This is not limited in this embodiment of this application.

Optionally, before the network device sends the first configuration information or the first indication information, the communication method 200 further includes: The terminal device may send first capability information to the network device, and the network device may receive the first capability information from the terminal device, where the first capability information indicates a time-frequency resource range supported by the terminal device; and the network device may determine the first time-frequency resource in the time-frequency resource range supported by the terminal device. In other words, the terminal device may report the time-frequency resource range supported by the terminal device, and the network device may determine, in the time-frequency resource range supported by the terminal device, the first time-frequency resource for sending the first AI preamble. In other words, the network device may determine, in the time-frequency resource range supported by the terminal device, the first time-frequency resource for sending the first AI preamble by the terminal device. Certainly, the network device may alternatively configure, for the terminal device based on an implementation of the network device, the first time-frequency resource for sending the first AI preamble by the terminal device. This is not limited in this embodiment of this application. Optionally, the first capability information may indicate at least one of a time domain length, a frequency domain length, an amplitude range, or a phase range, to indicate the time-frequency resource range supported by the terminal device. Optionally, the time-frequency resource range supported by the terminal device may be a time-frequency resource range supported by the terminal device when sending an AI preamble, or may be a time-frequency resource range supported by the terminal device when generating an AI preamble.

Optionally, before the network device sends the first configuration information or the first indication information, the terminal device may send second capability information to the network device, and the network device may receive the second capability information, where the second capability information indicates an AI preamble that can be generated by the terminal device. The network device may determine the first AI preamble from the AI preamble that can be generated by the terminal device. Optionally, the second capability information may directly indicate the AI preamble that can be generated by the terminal device. For example, the second capability information may indicate a sequence of the AI preamble that can be generated by the terminal device, an index corresponding to the sequence of the AI preamble that can be generated by the terminal device, or the like. Alternatively, the second capability information may indirectly indicate an AI preamble that can be generated by the terminal device. For example, the second capability information may indicate description information of generation of the AI preambles, to indicate the AI preamble that can be generated by the terminal device. For example, the second capability information may indicate a length of the AI preambles that can be supported by the terminal device (for example, at least one of a time domain length, a frequency domain length, or a quantity of time domain channels during resource mapping of the AI preambles). For another example, the second capability information may indicate an index of an AI model corresponding to the AI preamble that can be generated by the terminal device. Optionally, the terminal device may simultaneously send the first capability information and the second capability information, or may separately send the first capability information and the second capability information. This is not limited in this embodiment of this application.

Optionally, the first AI preamble set includes the AI preamble that can be generated by the terminal device, and the AI preamble that can be generated by the terminal device includes the first AI preamble. Optionally, the first AI preamble set is dedicated to AI model monitoring, the first AI preamble set is dedicated to AI model training, or the first AI preamble set is dedicated to AI model monitoring and AI model training. The first AI preamble set is determined based on the first AI submodel. For example, the first AI preamble set may be determined by the network device based on the first AI submodel and indicated to the terminal device. Alternatively, the network device indicates the first AI submodel to the terminal device, and the terminal device may determine the first AI preamble set based on the first AI submodel. Alternatively, the first AI preamble set may be a part of the AI model, and the network device may indicate the first AI preamble set to the terminal device.

Optionally, the first AI preamble set is dedicated to AI model monitoring, and a time-frequency resource corresponding to the AI preamble included in the first AI preamble set is the same as a time-frequency resource corresponding to an AI preamble used for conventional random access within a cell. In other words, because the AI preamble in the first AI preamble set is used for AI model monitoring, and the AI model is used to detect AI preambles for random access, to better monitor the AI model, the time-frequency resource corresponding to the AI preamble included in the first AI preamble set may overlap the time-frequency resource corresponding to the AI preamble used for conventional random access within a cell. In this way, the AI preamble in the first AI preamble set can better simulate or emulate AI preambles in an actual random access procedure. Therefore, the AI preamble in the first AI preamble set can also be better used to monitor the AI model.

Optionally, the first AI preamble set is dedicated to AI model training, and a time-frequency resource corresponding to the AI preamble included in the first AI preamble set is different from a time-frequency resource corresponding to an AI preamble used for conventional random access within a cell. In other words, because the AI preamble in the first AI preamble set is used for AI model training, that is, to train AI preambles or an AI preamble detection model adapted to a new scenario (for example, another time-frequency resource), the time-frequency resource corresponding to the AI preamble included in the first AI preamble set is different from the time-frequency resource corresponding to the AI preamble used for normal random access in the cell. In this way, a better AI model can be obtained through training.

Optionally, before the network device sends the first configuration information or the first indication information, the terminal device may send third capability information to the network device, and the network device may receive the third capability information, where the third capability information indicates whether the terminal device supports auxiliary AI model monitoring and/or auxiliary AI model training. If the third capability information indicates that the terminal device supports auxiliary AI model monitoring, the network device may send the first indication information, where the first indication information indicates the terminal device to send the first AI preamble used for AI model monitoring. If the third capability information indicates that the terminal device supports auxiliary AI model training, the network device may send the first indication information, where the first indication information indicates the terminal device to send the first AI preamble used for AI model training. If the third capability information indicates that the terminal device supports auxiliary AI model monitoring and auxiliary AI model training, the network device may send the first indication information, where the first indication information indicates the terminal device to send the first AI preamble used for AI model monitoring and AI model training. If the third capability information indicates that the terminal device supports neither auxiliary AI model monitoring nor auxiliary AI model training, the network device may not send the first indication information. Optionally, the terminal device may simultaneously send at least two of the first capability information, the second capability information, and the third capability information, or may separately send the first capability information, the second capability information, and the third capability information. This is not limited in this embodiment of this application.

Optionally, before S210, the communication method further includes: The network device sends second configuration information, and the terminal device receives the second configuration information, where the second configuration information indicates a first time domain offset and/or first frequency domain offset for sending the first AI preamble by the terminal device. Optionally, the second configuration information indicates the terminal device to generate and send the first time domain offset and/or the first frequency domain offset of the first AI preamble. For example, a unit of the first time domain offset may be a basic unit of a timing advance (timing advance, TA) (for example, in an LTE system, one TA equals 0.52 microseconds), may be a multiple of a basic unit of a TA, may be at another time granularity such as a quantity of time domain sampling points, a quantity of symbols, a quantity of slots, a quantity of subframes, or a quantity of frames, or may be an absolute time unit such as nanosecond or microsecond. For another example, a unit of the first frequency domain offset may be hertz (Hz), ppm, a normalized value relative to a used subcarrier spacing, or another manner of describing a frequency domain offset. This is not limited. If the unit of the first frequency domain offset is ppm, the first frequency domain offset may be y ppm. In this case, the terminal device may determine a reference frequency in a manner configured by the network device or in a predefined manner, and then determine an actual first frequency domain offset based on the reference frequency and y ppm. For example, the terminal device may determine the first frequency domain offset by multiplying the reference frequency by y ppm. In other words, in this case, the network device may indicate y ppm to indirectly indicate the first frequency offset. For example, the reference frequency is a current carrier frequency or a current crystal oscillator frequency of the terminal device. Optionally, the network device may send the second configuration information by using a dynamic indication, a static indication, or a semi-static indication. Optionally, the network device may send the second configuration information by using an RRC message, and the terminal device may receive the second configuration information by using the RRC message. Optionally, the network device may send the second configuration information by using MAC-CE signaling, and the terminal device may receive the second configuration information by using the MAC-CE signaling. Optionally, the network device may send the second configuration information by using a broadcast message, and the terminal device may receive the second configuration information by using the broadcast message. Optionally, the network device may send the second configuration information by using downlink control information (downlink control information, DCI), and the terminal device may receive the second configuration information by using the DCI. Optionally, the DCI may carry both the first indication information and the second configuration information, for example, a first field in the DCI is used to carry the first indication information, and a second field in the DCI is used to carry the second configuration information. The first field and the second field are consecutive. Optionally, the first field is located before the second field in the DCI. Optionally, the DCI may be dedicated DCI, or may be common DCI. Optionally, the network device may preconfigure a time domain offset set and/or a frequency domain offset set. The second configuration information may be used to configure an index of the first time domain offset in the preconfigured time domain offset set, and/or may be used to configure an index of the first frequency domain offset in the preconfigured frequency domain offset set.

Optionally, the network device may send at least two of the first indication information, the first configuration information, and the second configuration information in one message, and the terminal device may receive the at least two of the first indication information, the first configuration information, and the second configuration information from the message; or the network device may send at least two of the first indication information, the first configuration information, and the second configuration information in different messages, and the terminal device may obtain the at least two of the first indication information, the first configuration information, and the second configuration information from the different messages. This is not limited in this embodiment of this application. Optionally, the first indication information may indicate the terminal device to send the first AI preamble, may indicate the first time-frequency resource for sending the first AI preamble by the terminal device, or may indicate the first time domain offset and/or first frequency domain offset for sending the first AI preamble by the terminal device. In other words, one piece of information may indicate the terminal device to send the first AI preamble, another piece of information indicates the first time-frequency resource for sending the first AI preamble by the terminal device, and still another piece of information may indicate the first time domain offset and/or first frequency domain offset for sending the first AI preamble by the terminal device. Alternatively, one piece of information may indicate the terminal device to send the first AI preamble and indicate the first time-frequency resource for sending the first AI preamble by the terminal device. Alternatively, one piece of information indicates the terminal device to send the first AI preamble and indicates the first time domain offset and/or first frequency domain offset for sending the first AI preamble by the terminal device, for example, the first indication information may indicate the first AI preamble, and the first time domain offset and/or the first frequency domain offset, to be specific, the first indication information may indicate the index of the first AI preamble, and the index of the first time domain offset in the preconfigured time domain offset set and/or the index of the first frequency domain offset in the preconfigured frequency domain offset set. This is not limited in this embodiment of this application. Alternatively, one piece of information indicates the first time domain resource for sending the first AI preamble by the terminal device and indicates the first time domain offset and/or first frequency domain offset for sending the first AI preamble by the terminal device. Alternatively, one piece of information indicates the terminal device to send the first AI preamble, indicates the first time domain resource for sending the first AI preamble by the terminal device, and indicates the first time domain offset and/or first frequency domain offset for sending the first AI preamble by the terminal device. This is not limited in this embodiment of this application.

Optionally, before the network device sends the second configuration information, the communication method further includes: The terminal device sends fourth capability information to the network device, and the network device receives the fourth capability information, where the fourth capability information indicates a time domain offset range and/or frequency domain offset range supported by the terminal device when sending the AI preambles. Optionally, the network device may determine the first time domain offset in the time domain offset range supported by the terminal device when sending the AI preambles. In this case, the time domain offset range includes the first time domain offset. Optionally, the network device may determine the first frequency domain offset in the frequency domain offset range supported by the terminal device when sending the AI preambles. In this case, the frequency domain offset range includes the first frequency domain offset. Optionally, the fourth capability information indicates the time domain offset range and/or frequency domain offset range supported by the terminal device when generating and sending the AI preambles. Optionally, if the network device preconfigures a time domain offset range, the time domain offset range preconfigured by the network device includes the time domain offset range indicated by the fourth capability information. If the network device preconfigures a frequency domain offset range, the frequency domain offset range preconfigured by the network device includes the frequency domain offset range indicated by the fourth capability information. Optionally, the terminal device may simultaneously send at least two of the first capability information, the second capability information, the third capability information, and the fourth capability information, or may separately send the first capability information, the second capability information, the third capability information, and the fourth capability information. This is not limited in this embodiment of this application.

Optionally, after determining to perform AI model training or AI model monitoring, the network device may trigger S210. For example, after the network device periodically needs to perform AI model training or AI model monitoring, S210 may be triggered in each period. For example, the period may be determined by the network device. Optionally, the network device may aperiodically perform AI model training or AI model monitoring. For example, when the network device performs AI preamble detection by using the AI model (for example, when the network device performs AI preamble detection by using the second AI submodel), if detected AI preambles are inaccurate, the network device determines that AI model monitoring or AI model training needs to be performed. Therefore, S210 may be performed. In other words, the network device may periodically perform AI model monitoring or AI model training, or may aperiodically perform AI model monitoring or AI model training based on an implementation of the network device. A manner in which the network device triggers AI model monitoring or AI model training is not limited in this embodiment of this application.

S220: The terminal device sends, based on the first indication information, a first signal including the first AI preamble, and the network device receives the first signal including the first AI preamble.

Optionally, the terminal device may generate the first AI preamble based on the first indication information, and send the first signal including the first AI preamble. In other words, the first indication information indicates the terminal device to send the first AI preamble, and the terminal device may generate the first AI preamble and then send the first signal including the first AI preamble. For example, the terminal device may receive the first AI preamble set indicated by the network device, and determine, in the first AI preamble set, the first AI preamble indicated by the first indication information. For example, the terminal device may receive indication information sent by the network device and indicating the first AI submodel, and the terminal device may generate the first AI preamble based on the first AI submodel, or the terminal device may generate the first AI preamble set based on the first AI submodel and determine, in the first AI preamble set, the first AI preamble indicated by the first indication information.

Optionally, if the first indication information indicates the terminal device to send the first AI preamble in the RRC connected state, S220 includes: The terminal device sends, in the RRC connected state based on the first indication information, the first signal including the first AI preamble, and the network device receives the first signal, including the first AI preamble, sent by the terminal device in the RRC connected state based on the first indication information.

Optionally, if the terminal device receives the first configuration information, S220 includes: The terminal device sends, on the first time-frequency resource indicated by the first configuration information based on the first indication information, the first signal including the first AI preamble, and the network device receives, on the first time-frequency resource, the first signal including the first AI preamble. Optionally, if the terminal device receives the first configuration information, and the first configuration information indicates the index of the first time-frequency resource in the preconfigured time-frequency resource set set, S220 includes: The terminal device determines the first time-frequency resource in the preconfigured time-frequency resource based on the index indicated by the first configuration information, and sends, on the first time-frequency resource based on the first indication information, the first signal including the first AI preamble; and the network device receives, on the first time-frequency resource, the first signal including the first AI preamble.

Optionally, if the terminal device receives the second configuration information, S220 includes: The terminal device sends, based on the first time domain offset and/or first frequency domain offset configured by using the second configuration information, the first signal including the first AI preamble, and the network device receives, based on the first time domain offset and/or first frequency domain offset configured by using the second configuration information, the first signal including the first AI preamble. For example, the first time domain offset is N time domain units. Optionally, the first signal may be a frequency domain signal, or may be a time domain signal. If the first signal is a frequency domain signal, the terminal device offsets by N time domain units based on a start position of the first time-frequency resource. Optionally, the terminal device may alternatively offset by N time domain units based on another predefined or indicated start position. If the first signal is a time domain signal, the first signal may be a signal obtained by the terminal device by performing inverse fast Fourier transform (inverse fast Fourier transform, IFFT) on a frequency domain signal including the first AI preamble. Optionally, the first signal may be a time domain signal before cyclic prefix addition or a time domain signal after cyclic prefix addition, and the terminal device offsets by N time domain units based on a time domain signal start point or another indicated or predefined time domain signal start point. For another example, the first frequency domain offset is m, and m represents a normalized value relative to a used subcarrier spacing. The first signal may be a time domain signal obtained by the terminal device by performing IFFT on a frequency domain signal including the first AI preamble. The terminal device may multiply each time domain sampling point by a coefficient. If the time domain sampling point is represented by x(n), the coefficient multiplied by the time domain sampling point x(n) is represented by , where represents a quantity of IFFT points. Alternatively, the first signal may be a frequency domain signal. If a signal value on each subcarrier before a frequency offset occurs is represented by X(k), where k represents a number of the subcarrier, a signal value on each subcarrier after the frequency offset occurs is represented by , where represents all subcarriers including the subcarrier , the first frequency domain offset is m, and m represents a normalized value relative to a used subcarrier spacing. Alternatively, the second configuration information indicates the first time domain offset and/or first frequency domain offset for generating and sending the first AI preamble by the terminal device. Optionally, S220 includes: The terminal device sends, based on the first time domain offset and/or first frequency domain offset configured by using the second configuration information, the first signal including the first AI preamble, and the network device receives, based on the first time domain offset and/or first frequency domain offset configured by using the second configuration information, the first signal including the first AI preamble. A time domain reference position at which a time domain offset occurs and a frequency domain reference position at which a frequency domain offset occurs are not limited in this embodiment of this application. ${exp}^{\left(j*2p*m*n/K\right)} K K k {å}_{l} X \left(k\right) * \frac{{exp}^{\left(j*2p*\left(k+m-l\right)\right)} - 1}{j * 2 p * \left(k+m-l\right)} l k$

Optionally, if the first AI preamble is used for AI model monitoring, the communication method 200 further includes: The network device detects the first signal including the first AI preamble, for example, the network device inputs, into the second AI submodel, the first signal or a result obtained by performing processing based on the first signal, to obtain a detection result; and the network device learns, through detection, that the first signal includes at least one AI preamble. If the at least one AI preamble includes the first AI preamble, the network device may determine that the AI model is accurate; or if the network device learns, through detection, that the at least one AI preamble included in the first signal does not include the first AI preamble, the network device may determine that the AI model is inaccurate, and in this case, the network device may update the AI model, the network device may update the AI preamble detection model, the network device may deactivate or update the first AI preamble set, where the first AI preamble set includes the first AI preamble, or the network device may deactivate or update the first AI submodel used to generate the first AI preamble set.

Optionally, if the first AI preamble is used for AI model monitoring, the communication method 200 further includes: The network device detects the first signal including the first AI preamble. If the network device learns, through detection, of a probability that the first signal includes at least one AI preamble, and an existence probability of an AI preamble in the at least one AI preamble is greater than a preset threshold and the AI preamble is the same as the first AI preamble, the network device may determine that the AI model is accurate; or if the network device learns, through detection, that an existence probability of each AI preamble included in the first signal is less than or equal to a preset threshold, or an existence probability of an AI preamble in at least one AI preamble is greater than a preset threshold and the AI preamble is different from the first AI preamble, the network device may determine that the AI model is inaccurate, and in this case, the network device may update the AI model, the network device may update or deactivate the first AI preamble set, where the first AI preamble set includes the first AI preamble, or the network device may update or deactivate the first AI submodel used to generate the first AI preamble set.

Optionally, if the first AI preamble is used for AI model training, the communication method 200 may include: The network device detects the first signal including the first AI preamble, uses the first signal as a model input, and uses the first AI preamble as a training label, to obtain a second AI preamble detection model through training, where the second AI preamble detection model obtained through training is used to perform AI preamble detection.

It should be noted that the communication method 200 is described by using one terminal device as an example. In some cases, the network device may simultaneously schedule a plurality of terminal devices to send AI preambles, and the network device may perform AI model monitoring or AI model training by using the AI preambles sent by the plurality of terminal devices. In other words, to facilitate description of receiving and sending the first signal, in the descriptions of S220, the terminal device sends, based on the first indication information, the first signal including the first AI preamble, and the network device receives the first signal including the first AI preamble. In some cases, in addition to the first signal, signals that may be received by the network device may further include the first signal. In this case, the network device may receive a superposed signal. For example, the network device may schedule, on the first time-frequency resource, sending of another signal other than the first AI preamble. In this case, the signal detected by the network device may be a superposition of the first signal and an interference signal including another preamble and/or non-preamble signal. When performing AI model monitoring or AI model training, the network device may input the superposed signal into the AI model, to detect whether the superposed signal includes the first AI preamble.

In the communication method 200, the network device may indicate the terminal device to send the first AI preamble; the terminal device may send, based on an indication of the network device, the first signal including the first AI preamble; and the network device may detect the first signal, and detect the first signal by using an AI model, to determine whether the AI model is accurate or inaccurate. Therefore, a method for monitoring an AI model in a random access scenario is provided. Alternatively, the network device may train an AI model based on the first signal and the first AI preamble that is used as a label. Therefore, a method for training an AI model in a random access scenario is provided. In the communication method 200, AI model monitoring and training are performed on a network device side. Therefore, it may be considered that the terminal device assists the network device in performing AI model monitoring and training.

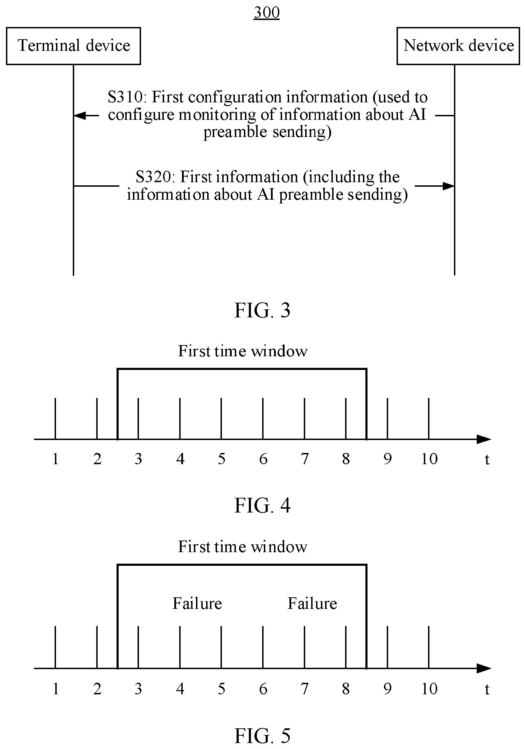

In some scenarios, the terminal device may monitor information about AI preamble sending by the terminal device, and send information obtained through monitoring to the network device; and the network device may determine, based on the information obtained through monitoring by the terminal device, whether the AI model is accurate, to monitor the AI model. The following describes a communication method provided in an embodiment of this application with reference to FIG. 3. As shown in FIG. 3, a communication method 300 includes the following steps.

S310: A network device sends first configuration information to a terminal device, and the terminal device receives the first configuration information from the network device, where the first configuration information is used to configure monitoring of information about AI preamble sending.

Optionally, the first configuration information is used to configure the terminal device to monitor information about AI preamble sending by the terminal device.

Alternatively, the first configuration information is used to configure the terminal device to record information about AI preamble sending by the terminal device.

Optionally, the first configuration information is used to configure monitoring of information about AI preamble sending in a first time window. Optionally, the first configuration information is used to configure the terminal device to monitor information about AI preamble sending by the terminal device in a first time window. Optionally, the first configuration information is used to configure the terminal device to monitor information about a success of AI preamble sending by the terminal device in the first time window and information about a failure of AI preamble sending by the terminal device in the first time window. Optionally, the first configuration information is used to configure the terminal device to monitor the information about the failure of AI preamble sending by the terminal device in the first time window. Optionally, the information about the failure of AI preamble sending by the terminal device includes at least one of a quantity of AI preamble failures, an identifier of an AI preamble that fails to be sent, a sending time of an AI preamble that fails to be sent, or a transmit power of an AI preamble that fails to be sent. Optionally, the information about the failure of AI preamble sending may further include a start time and an end time of an AI preamble sending failure. Optionally, the first configuration information may be used to configure a label of a failure of AI preamble sending by the terminal device or a success label of AI preamble sending by the terminal device.

Optionally, the first configuration information is used to configure monitoring of the information about the success of AI preamble sending and the information about the failure of AI preamble sending. Optionally, the first configuration information is used to configure the terminal device to monitor the information about the success of AI preamble sending by the terminal device and the information about the failure of AI preamble sending by the terminal device. In other words, the first configuration information may be used to configure the terminal device to monitor the information about the success of AI preamble sending by the terminal device and the information about the failure of AI preamble sending by the terminal device throughout a period of AI preamble sending. Optionally, the period of AI preamble sending may be from a moment at which the terminal device performs AI preamble sending for a 1^{st} time to a moment at which a random access procedure ends. Optionally, the first configuration information is used to configure the terminal device to monitor the information about the failure of AI preamble sending by the terminal device. In other words, the first configuration information may be used to configure the terminal device to monitor the information about the failure of AI preamble sending throughout the period of AI preamble sending. Optionally, the first configuration information is used to configure the terminal device to record at least one of a quantity of AI preamble sending failures, an identifier of an AI preamble that fails to be sent, a sending time of an AI preamble that fails to be sent, or a transmit power of an AI preamble that fails to be sent. In other words, the first configuration information may be used to configure the terminal device to monitor at least one of the quantity of failures of AI preamble sending by the terminal device, the identifier of the AI preamble that fails to be sent, the sending time of the AI preamble that fails to be sent, or the transmit power of the AI preamble that fails to be sent throughout the period of AI preamble sending.

Optionally, S310 includes: The network device may send the first configuration information to the terminal device by using a system information block (system information block, SIB) message, and the terminal device may receive the first configuration information from the network device by using the SIB message.

Optionally, the communication method 300 further includes: The network device sends second configuration information, and the terminal device receives the second configuration information, where the second configuration information is used to configure to send first information upon N AI preamble sending failures, and N is a positive integer. Optionally, the network device may send the second configuration information to the terminal device by using a system information block (system information block, SIB) message, and the terminal device may receive the second configuration information from the network device by using the SIB message. Optionally, the second configuration information is specifically used to configure the terminal device to send, upon the N AI preamble sending failures, the first information after entering an RRC connected state via a non-AI preamble. Optionally, the second configuration information is specifically used to configure the terminal device to send, upon the N consecutive AI preamble sending failures, the first information after entering an RRC connected state via a non-AI preamble. Optionally, the N AI preamble sending failures may be N sending failures for a same AI preamble, or may be a total of N sending failures for different AI preambles.

Optionally, the network device may simultaneously send the first configuration information and the second configuration information to the terminal device, or may separately send the first configuration information and the second configuration information to the terminal device. This is not limited in this embodiment of this application.

S320: The terminal device sends the first information to the network device based on the first configuration information, and the network device receives the first information, where the first information includes the information about AI preamble sending.

Optionally, the communication method 300 further includes: The terminal device performs AI preamble sending at least once, and the network device may receive AI preambles sent by the terminal device. If the network device receives an AI preamble sent by the terminal device, the network device may send a response to the AI preamble at the time to the terminal device, for example, the response information may be random access response (random access response, RAR) information. After receiving the response, the terminal device may determine that the AI preamble is successfully sent this time. If the network device does not receive or detect an AI preamble sent by the terminal device, the network device does not send any response to the terminal device. If the terminal device does not receive a response to the AI preamble at the time within a preset time period, the terminal device may determine that the AI preamble fails to be sent.

Optionally, the first information includes the information about AI preamble sending by the terminal device. In other words, the terminal device may monitor the information about AI preamble sending by the terminal device, generate the first information based on information obtained through monitoring, and send the first information to the network device.

Optionally, if the first configuration information is used to configure the terminal device to record the information about AI preamble sending by the terminal device, the terminal device may record, based on the first configuration information, the information about AI preamble sending by the terminal device, and send the first information to the network device, where the first information includes the information about AI preamble sending by the terminal device as recorded by the terminal device.

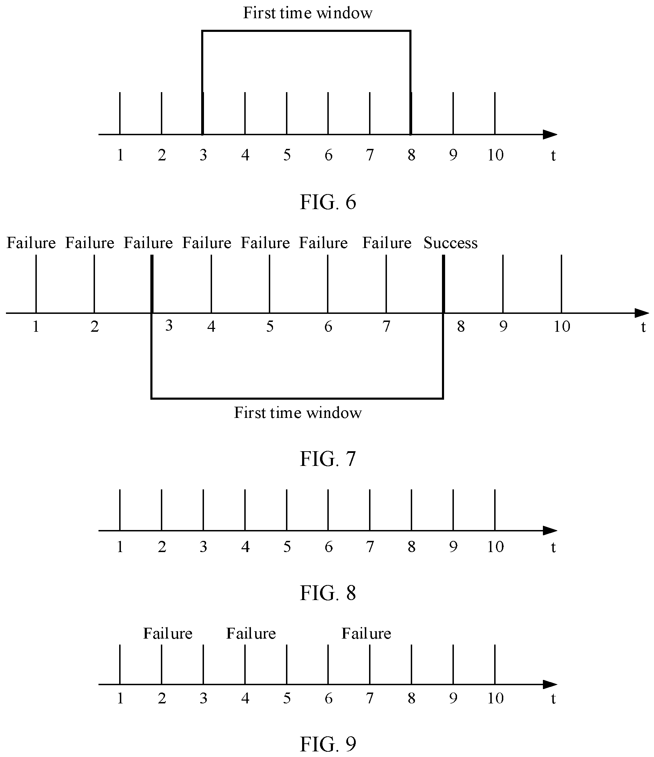

Optionally, if the first configuration information is used to configure monitoring of the information about AI preamble sending in the first time window, the terminal device may monitor, based on the first configuration information, the information about AI preamble sending in the first time window. In this case, the first information includes the information about AI preamble sending in the first time window. Optionally, if the first configuration information is used to configure the terminal device to monitor the information about AI preamble sending by the terminal device in the first time window, the terminal device monitors, based on the first configuration information, the information about AI preamble sending by the terminal device in the first time window, and the terminal device may not monitor information about AI preamble sending by the terminal device outside the first time window. In this case, the first information includes the information about AI preamble sending by the terminal device in the first time window. For example, as shown in FIG. 4, the terminal device performs AI preamble sending a total of 10 times, and in the first time window, the terminal device performs AI preamble sending a total of six times, namely, AI preamble sending from a 3^{rd} time to an 8^{th} time. Therefore, the first information includes information about the six times of AI preamble sending by the terminal device in the first time window. Optionally, if the first configuration information is used to configure the terminal device to monitor the information about the success of AI preamble sending by the terminal device in the first time window and the information about the failure of AI preamble sending by the terminal device in the first time window, the terminal device monitors, based on the first configuration information, the information about the success of AI preamble sending by the terminal device in the first time window and the information about the failure of AI preamble sending by the terminal device in the first time window. The first information includes the information about the success of AI preamble sending by the terminal device in the first time window and the information about the failure of AI preamble sending by the terminal device in the first time window. For example, as shown in FIG. 4, the terminal device performs AI preamble sending a total of 10 times, and in the first time window, the terminal device performs AI preamble sending a total of six times, namely, AI preamble sending from a 3^{rd} time to an 8^{th} time. Therefore, the first information includes information about a failure in the six times of AI preamble sending by the terminal device in the first time window and information about a success in the six times of AI preamble sending by the terminal device in the first time window. Optionally, if the first configuration information is used to configure the terminal device to monitor the information about the failure of AI preamble sending by the terminal device in the first time window, the terminal device monitors, based on the first configuration information, the information about the failure of AI preamble sending by the terminal device in the first time window. The first information includes the information about the failure of AI preamble sending by the terminal device in the first time window. For example, as shown in FIG. 5, the terminal device performs AI preamble sending a total of 10 times, and in the first time window, the terminal device performs AI preamble sending a total of six times, namely, AI preamble sending from a 3^{rd} time to an 8^{th} time. Therefore, AI preamble sending for a 4^{th} time and AI preamble sending for a 7^{th} time in the first time window fail, and the first information includes information about failures of AI preamble sending for the 4^{th} time and the 7^{th} time in the first time window. Optionally, if the first configuration information is used to configure the information about the failure of AI preamble sending by the terminal device, and the information about the failure of AI preamble sending by the terminal device includes at least one of a quantity of AI preamble sending failures, an identifier of an AI preamble that fails to be sent, a sending time of an AI preamble that fails to be sent, a transmit power of an AI preamble that fails to be sent, or a start time and an end time at which the AI preamble fails to be sent, the terminal device may monitor, based on the first configuration information, at least one of a quantity of failures of AI preamble sending by the terminal device, an identifier of an AI preamble that fails to be sent, a sending time of an AI preamble that fails to be sent, a transmit power of an AI preamble that fails to be sent, or a start time and an end time at which the AI preamble fails to be sent in the first time window. The first information may include at least one of the quantity of failures of AI preamble sending by the terminal device, the identifier of the AI preamble that fails to be sent, the sending time of the AI preamble that fails to be sent, the transmit power of the AI preamble that fails to be sent, or the start time and the end time at which the AI preamble fails to be sent in the first time window. Optionally, the first time window may be a static time window, for example, determined by configuring start and end time points of the first window. Optionally, the first time window may be a dynamic time window, for example, determined by configuring trigger events corresponding to start and end time points. For example, the first time window may be a time period from a sending moment of an x1^{th} AI preamble sending to a sending moment of an x2^{th} AI preamble sending. As shown in FIG. 6, x1 may be 3, x2 may be 8, and the first time window is from a sending moment of a 3^{rd} AI preamble sending to a sending moment of an 8^{th} AI preamble sending. The first time window may include the sending moment of the x1^{th} AI preamble sending and/or the sending moment of the x2^{th} AI preamble sending; or the first time window may not include the sending moment of the x1^{th} AI preamble sending, or may not include the sending moment of the x2^{th} AI preamble sending. For another example, the first time window may be a time period from a moment at which an AI preamble fails to be sent x3 times to a moment at which the AI preamble is successfully sent for a 1^{st} time. For example, as shown in FIG. 7, x3 is 3. The terminal device successfully sends the AI preamble at an 8^{th} time, and the AI preamble fails to be sent from the 1^{st} time to the 7^{th} time. In this case, the first time window is from a sending moment of a 3^{rd} AI preamble sending to a sending moment of an 8^{th} AI preamble sending.

Optionally, if the first configuration information is used to configure the terminal device to monitor the information about the success of AI preamble sending and the information about the failure of AI preamble sending, the terminal device monitors, based on the first configuration information, the information about the success of AI preamble sending by the terminal device and the information about the failure of AI preamble sending by the terminal device. The first information includes the information about the success of AI preamble sending by the terminal device and the information about the failure of AI preamble sending by the terminal device. For example, as shown in FIG. 8, the terminal device performs AI preamble sending a total of 10 times, and the terminal device records information about a failure in the 10 times of AI preamble sending by the terminal device and information about a success in the 10 times of AI preamble sending by the terminal device. Therefore, the first information includes the information about the failure in the 10 times of AI preamble sending by the terminal device and the information about the success in the 10 times of AI preamble sending by the terminal device. Optionally, if the first configuration information is used to configure the terminal device to monitor the information about the failure of AI preamble sending by the terminal device, the terminal device monitors, based on the first configuration information, the information about the failure of AI preamble sending by the terminal device. The first information includes the information about the failure of AI preamble sending by the terminal device. For example, as shown in FIG. 9, the terminal device performs AI preamble sending a total of 10 times, and the terminal device fails to perform AI preamble sending for a 2^{nd} time, a 4^{th} time, and a 7^{th} time. The terminal device records information about three AI preamble sending failures. Therefore, the first information includes the information about the failures of AI preamble sending by the terminal device at the 2^{nd} time, the 4^{th} time, and the 7^{th} time. Optionally, if the first configuration information is used to configure the terminal device to record at least one of a quantity of AI preamble sending failures, an identifier of an AI preamble that fails to be sent, a sending time of an AI preamble that fails to be sent, a transmit power of an AI preamble that fails to be sent, or a start time and an end time at which the AI preamble fails to be sent, the terminal device may monitor, based on the first configuration information, at least one of the quantity of failures of AI preamble sending by the terminal device, the identifier of the AI preamble that fails to be sent, the sending time of the AI preamble that fails to be sent, or the transmit power of the AI preamble that fails to be sent. The first information may include at least one of the quantity of failures of AI preamble sending by the terminal device, the identifier of the AI preamble that fails to be sent, the sending time of the AI preamble that fails to be sent, or the transmit power of the AI preamble that fails to be sent.

Optionally, the first configuration information configures a label of a failure of AI preamble sending by the terminal device or a success label of AI preamble sending by the terminal device. If the terminal device fails to perform AI preamble sending, the terminal device may further record a failure label of AI preamble sending this time when recording information about AI preamble sending this time. In this case, the first information may include the failure label of AI preamble sending this time. For example, when the first configuration information configures the terminal device to monitor information about a success of AI preamble sending and information about a failure of AI preamble sending by the terminal device throughout a period of AI preamble sending or within the first time window, and when AI preamble sending fails, the terminal device may further record a failure label. If the terminal device succeeds in performing AI preamble sending, the terminal device may further record a success label of AI preamble sending this time when recording information about AI preamble sending this time. For example, when the first configuration information configures the terminal device to monitor information about a success of AI preamble sending and information about a failure of AI preamble sending by the terminal device throughout a period of AI preamble sending or within the first time window, and when AI preamble sending succeeds, the terminal device may further record a success label.

Optionally, if the terminal device receives the second configuration information, and the second configuration information is used to configure to send first information upon N AI preamble sending failures, the terminal device may record a quantity of AI preamble sending failures. The terminal device may send the first information upon the N AI preamble sending failures. Optionally, the terminal device may send the first information after entering the RRC connected state. Optionally, the terminal device may send the first information in the random access procedure. For example, in two-step random access, the terminal device sends the first information on a physical uplink shared channel (physical uplink shared channel, PUSCH). The random access may be random access based on a non-AI preamble, or may be random access based on an AI preamble.

Optionally, if the terminal device receives the second configuration information, and the second configuration information is specifically used to configure the terminal device to send, upon the N AI preamble sending failures, the first information after entering the RRC connected state via the non-AI preamble, sending the first information upon the N AI preamble sending failures includes: The terminal device sends the first information after entering the RRC connected state via the non-AI preamble. In other words, the terminal device attempts to send an AI preamble, and performs random access by using the AI preamble to enter the RRC connected state. However, the AI preamble may always fail to be sent. As a result, the terminal device cannot enter the RRC connected state based on the AI preamble. Therefore, the terminal device may send, based on the second configuration information, the first information after entering the RRC connected state via the non-AI preamble. Optionally, the non-AI preamble may be referred to as a legacy (legacy) preamble (preamble), a conventional preamble, or the like, for example, a preamble based on a ZC sequence or an m-sequence. Optionally, if the terminal device receives the second configuration information, and the second configuration information is specifically used to configure the terminal device to send, upon the N consecutive AI preamble sending failures, the first information after entering the RRC connected state via the non-AI preamble, the terminal device sends, upon the N consecutive AI preamble sending failures, the first information after entering the RRC connected state via the non-AI preamble. In other words, in the process in which the terminal device attempts to perform random access by using the AI preamble to enter the RRC connected state, after a quantity of failures reaches N, the terminal device may fall back to performing random access by using the non-AI preamble, and send the first information after entering the RRC connected state by performing random access by using the non-AI preamble. Optionally, if an AI preamble that fails to be sent N times belongs to an AI preamble set 1, the terminal device may send the first information after entering the RRC connected state via a first-type non-AI preamble. If an AI preamble that fails to be sent for N times belongs to an AI preamble set 2, the terminal device may send the first information after entering the RRC connected state via a second-type non-AI preamble. The AI preamble set 1 is different from the AI preamble set 2, and an intersection of the AI preamble set 1 and the AI preamble set 2 is empty. The first type is different from the second type, for example, the first type is an NR formatC1 type, and the second type is an NR formatC2 type. In other words, if an AI preamble that fails to be sent belongs to an AI preamble set, the terminal device may enter the RRC connected state via a non-AI preamble of a type corresponding to the AI preamble set.

Optionally, if the terminal device successfully sends an AI preamble, the terminal device may also send the first information after successfully entering the RRC connected state via the AI preamble this time. In other words, the terminal device may send the first information after entering the RRC connected state. The terminal device may enter the RRC connected state via an AI preamble, or may enter the RRC connected state via a non-AI preamble. A manner in which the terminal device enters the RRC connected state is not limited in this embodiment of this application.

Optionally, the network device may send a first request message to the terminal device, and the terminal device may receive the first request message from the network device. S320 includes: The terminal device sends, in response to the first request message, the first information to the network device based on the first configuration information, and the network device receives the first information from the terminal device. In other words, the terminal device may send the first information based on a request of the network device. Optionally, the terminal device may receive the first request message from the network device in the RRC connected state, and the terminal device sends, in response to the first request message, the first information in the RRC connected state based on the first configuration information. For example, the first request information is indication information used by the network device to trigger the terminal device to send the first information. The network device may send the first request message by using RRC signaling, MAC-CE signaling, or DCI signaling. After receiving the first request message, the terminal device sends, to the network device, the first information generated based on the first configuration information.

Optionally, the terminal device may send a second request message, and the network device may receive the second request message. After receiving the second request message, the network device may send a response message of the second request message to the terminal device. S320 includes: The terminal device may send the first information to the network device based on the response message of the second request message and based on the first configuration information. In other words, the terminal device may actively request, by using the second request message, the network device to send the first information. After the network device sends the response message of the second request message, it indicates that the network device authorizes the terminal device to send the first information, and the terminal device may send the first information to the network device based on the response message of the second request message. Optionally, the terminal device may send the second request message to the network device in the RRC connected state, and the terminal device may receive, in the RRC connected state, a response message of the second request message sent by the network device, and send the first information to the network device in the RRC connected state. For example, the second request message may be a scheduling request (Scheduling Request, SR) message, and the response message of the second request message may be grant (uplink grant, UL grant) information for uplink data transmission. Optionally, a trigger condition for sending the second request message by the terminal device may be determined based on the second configuration information. For example, after the second configuration information indicates that the terminal device detects N sending failures, the terminal device may generate and send the second request message after entering the RRC connected state.

Optionally, after S320, the communication method 300 further includes: The network device performs AI model monitoring or AI model training based on the first information. For example, during AI model monitoring, the network device compares, based on an identifier of an AI preamble that fails to be sent and a sending failure time in the first information, whether the identifier of the AI preamble is detected when AI preamble detection is performed at the sending failure time. If the identifier of the AI preamble is not detected, the network device may determine that the AI preamble or the AI preamble detection model is faulty, and may deactivate an AI preamble set to which the AI preamble belongs, or change the AI preamble detection model. For example, during AI model training, the network device uses an identifier of an AI preamble as a label based on the identifier of the AI preamble and an AI preamble sending time in the first information and with reference to a received signal at the time point at which the AI preamble is sent, and uses the received signal as an input of an AI detection model, to train the AI detection model.

For the AI model in the communication method 300, refer to the descriptions of the AI model in the communication method 200. To avoid repetition, details are not described.

It should be noted that the communication method 300 is described by using one terminal device as an example. In some cases, the network device may send configuration information to a plurality of terminal devices, to configure the plurality of terminal devices to monitor information about AI preamble sending. The terminal devices may send the information about AI preamble sending obtained through monitoring, and the network device may perform AI model monitoring or AI model training by using the information sent by the plurality of terminal devices.

In the communication method 300, the network device may send the first configuration information to the terminal device to configure information about AI preamble sending by the terminal device; the terminal device may send the first information based on the first configuration information from the network device, where the first information includes the information about AI preamble sending by the terminal device; and the network device may perform AI model monitoring or AI model training based on the first information, to monitor or train the AI model used for random access.

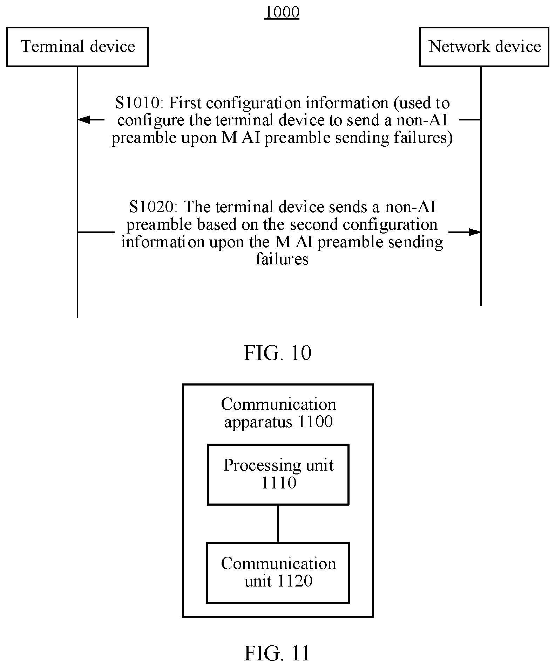

In some cases, after failing to perform random access by using the AI preamble, the terminal device may enter the RRC connected state via the non-AI preamble. Descriptions are provided below with reference to a communication method 1000 in FIG. 10. As shown in FIG. 10, the communication method 1000 includes the following steps.

S1010: A network device sends first configuration information, and a terminal device receives the first configuration information, where the first configuration information is used to configure the terminal device to send a non-AI preamble upon M AI preamble sending failures.

Optionally, S1010 includes: The network device may send the first configuration information by using a broadcast message, and the terminal device may receive the first configuration information by using the broadcast message.

Optionally, the communication method 1000 further includes: The terminal device performs AI preamble sending at least once, and the network device may receive AI preambles sent by the terminal device. If the network device receives an AI preamble sent by the terminal device, the network device may send a response to the AI preamble at the time to the terminal device. After receiving the response, the terminal device may determine that the AI preamble is successfully sent this time. If the network device does not receive an AI preamble sent by the terminal device, the network device does not send any response to the terminal device. If the terminal device does not receive a response to the AI preamble at the time within a preset time period, the terminal device may determine that the AI preamble fails to be sent.

S1020: The terminal device sends a non-AI preamble based on the first configuration information upon the M AI preamble sending failures.

Optionally, the non-AI preamble may be referred to as a legacy (legacy) preamble (preamble), a legacy preamble, or the like, for example, a preamble based on a ZC sequence or an m-sequence.

The non-AI preamble is used for random access.

Optionally, the non-AI preamble may be configured in the first configuration information. For example, the first configuration information indicates that the non-AI preamble is a non-AI preamble in a non-AI random access manner used by a current cell.

Optionally, the M AI preamble sending failures may be M sending failures for a same AI preamble, or may be a total of M sending failures for different AI preambles.

In the communication method 1000, when the terminal device fails to perform AI preamble sending M times, that is, the terminal device attempts to perform random access by using the AI preamble, and M attempts fail, it indicates that the AI preamble may not be used for random access. Therefore, the terminal device may fall back to a non-AI preamble, and may attempt to perform random access by using the non-AI preamble, to avoid a waste of signaling or an excessively long access delay caused by an access failure due to continuous random access performed by the terminal device by using the AI preamble.

It should be noted that the first configuration information in the communication method 200, the first configuration information in the communication method 300, and the first configuration information in the communication method 1000 have different meanings, and the second configuration information in the communication method 200 and the second configuration information in the communication method 300 also have different meanings.

FIG. 11 is a block diagram of a communication apparatus according to an embodiment of this application. As shown in FIG. 11, a communication apparatus 1100 may include a processing unit 1110 and a communication unit 1120. The communication unit 1120 may implement a corresponding communication function. The communication may be internal communication of the communication apparatus 1100, or may be communication between the communication apparatus 1100 and another apparatus. The processing unit 1110 may implement a corresponding processing function. The communication unit 1120 may also be referred to as a communication interface or a transceiver unit. Optionally, the communication apparatus 1100 may further include a storage unit. The storage unit may be configured to store instructions and/or data. The processing unit 1110 may read the instructions and/or the data in the storage unit, so that the apparatus implements the foregoing method embodiment.

In a possible design, the communication apparatus 1100 may be the terminal device in the communication method 200, or may be a module or a chip used in the terminal device. The communication apparatus 1100 may be configured to perform the steps or procedures performed by the terminal device in the embodiment of the method 200. Optionally, the communication apparatus 1100 may be the network device in the communication method 200, or may be a module or a chip used in the network device. The communication apparatus 1100 may be configured to perform the steps or procedures performed by the network device in the embodiment of the communication method 200.

In another possible design, the communication apparatus 1100 may be the terminal device in the communication method 300, or may be a module or a chip used in the terminal device. The communication apparatus 1100 may be configured to perform the steps or procedures performed by the terminal device in the embodiment of the method 300. Optionally, the communication apparatus 1100 may be the network device in the communication method 300, or may be a module or a chip used in the network device. The communication apparatus 1100 may be configured to perform the steps or procedures performed by the network device in the embodiment of the communication method 300.

In still another possible design, the communication apparatus 1100 may be the terminal device in the communication method 1000, or may be a module or a chip used in the terminal device. The communication apparatus 1100 may be configured to perform the steps or procedures performed by the terminal device in the embodiment of the method 1000. Optionally, the communication apparatus 1100 may be the network device in the communication method 1000, or may be a module or a chip used in the network device. The communication apparatus 1100 may be configured to perform the steps or procedures performed by the network device in the embodiment of the communication method 1000.

For details about steps or procedures performed by each unit in the communication apparatus 1100, refer to the foregoing method embodiments. The details are not described herein again.

It should be understood that the "unit" in the communication apparatus 1100 may be implemented by hardware, or may be implemented by software, or may be implemented by hardware executing corresponding software. For example, the "unit" may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another appropriate component that supports the described function. For another example, the communication unit 1120 may be replaced with a transceiver machine or a transceiver circuit (which may include, for example, a receiver circuit and a transmitter circuit), and the processing unit 1110 may be replaced with a processor or a processing circuit.

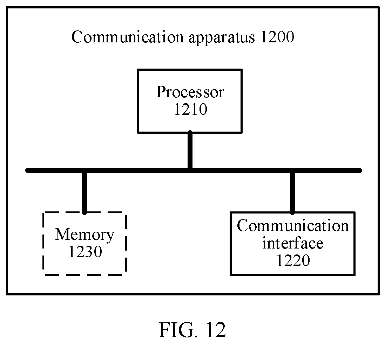

FIG. 12 is a block diagram of another communication apparatus 1200 according to an embodiment of this application. The communication apparatus 1200 may be a terminal device or a network device, or may be a chip, a chip system, a processor, or the like that supports the terminal device or the network device in implementing the foregoing methods. The apparatus may be configured to implement the methods described in the foregoing method embodiments. For details, refer to the descriptions in the foregoing method embodiments.

The communication apparatus 1200 may include one or more processors 1210. The processor 1210 may also be referred to as a processing unit, and may implement a specific control function. The processor 1210 may be a general-purpose processor, a dedicated processor, or the like. For example, the processor 1210 may be a baseband processor or a central processing unit. The baseband processor may be configured to process a communication protocol and communication data. The central processing unit may be configured to: control the communication apparatus (for example, a base station, a baseband chip, a user chip, a DU, or a CU), execute a software program, and process data of the software program.

In an optional design, the processor 1210 may also store instructions and/or data, and the instructions and/or the data may be run by the processor 1210, to cause the communication apparatus 1200 to perform the method described in the foregoing method embodiments. Optionally, the processing unit 1110 in the communication apparatus 1100 may be the processor 1210.

In another optional design, the communication apparatus 1200 may include a communication interface 1220 configured to implement receiving and sending functions. For example, the communication interface 1220 may be a transceiver circuit, an interface, an interface circuit, or a transceiver. The transceiver circuit, the interface, the interface circuit, or the transceiver configured to implement the receiving and sending functions may be separated, or may be integrated together. The transceiver circuit, the interface, the interface circuit, or the transceiver may be configured to read and write code/data. Alternatively, the transceiver circuit, the interface, the interface circuit, or the transceiver may be configured to transmit or transfer a signal. Optionally, the communication unit 1120 in the communication apparatus 1100 may be the communication interface 1220.

Optionally, the communication apparatus 1200 may include one or more memories 1230. The memory may store instructions. The instructions may be run on the processor 1210, to cause the communication apparatus 1200 to perform the method described in the foregoing method embodiments. Optionally, the memory 1230 may further store data. Optionally, the processor 1210 may also store instructions and/or data. The processor 1210 and the memory 1230 may be separately disposed, or may be integrated together.

A person skilled in the art may understand that for ease of description, FIG. 12 shows only one memory and one processor. In an actual communication apparatus, there may be a plurality of processors and memories. The memory may also be referred to as a storage medium, a storage device, or the like. This is not limited in embodiments of this application.

For example, the processor may include a baseband processor and a central processing unit. The baseband processor is mainly configured to process the communication protocol and the communication data. The central processing unit is mainly configured to: control the entire terminal device, execute the software program, and process the data of the software program. The processor in FIG. 12 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

It should be understood that, in a possible design, steps in the method embodiments provided in this application can be implemented by using a hardware integrated logic circuit in a processor, or by using instructions in a software form. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps of the method disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a computer program product. The computer program product includes computer program code. When the computer program code is run on a computer, the computer is caused to perform the steps or procedures performed by the terminal device or the network device in any one of the foregoing method embodiments.

This application further provides a computer-readable storage medium. The computer-readable storage medium stores program code. When the program code is run on a computer, the computer is caused to perform the steps or procedures performed by the terminal device or the network device in any one of the foregoing method embodiments.

This application further provides a communication apparatus, including a processor and an interface. The interface is configured to send and/or receive a signal, so that the processor performs the steps or procedures performed by the terminal device or the network device in any one of the foregoing method embodiments.

This application further provides a communication system, including a terminal device and a network device.

The foregoing apparatus embodiments are in full correspondence with the method embodiments, and corresponding modules or units perform corresponding steps. For example, a communication unit or a communication interface performs a receiving step or a sending step in the method embodiments, and a processing unit or a processor may perform a step other than the sending step and the receiving step.

In embodiments of this application, the terms and English abbreviations are all examples given for ease of description, and should not constitute any limitation on this application. This application does not exclude a possibility of defining, in an existing or future protocol, another term that can implement a same or similar function.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from a variety of computer-readable storage media having various data structures stored thereon. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatuses, and units, refer to a corresponding process in the foregoing method embodiments, and details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, all or some of the functions of the functional units may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for causing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending first indication information, wherein the first indication information indicates to send a first artificial intelligence AI preamble, and the first AI preamble is used for AI model monitoring and/or AI model training; and
receiving a first signal comprising the first AI preamble.

2. The communication method according to claim 1, wherein the communication method further comprises:
sending first configuration information, wherein the first configuration information is used to configure a first time-frequency resource for sending the first AI preamble; and
the receiving the first signal comprising the first AI preamble further comprises:
receiving the first signal on the first time-frequency resource, wherein
the first time-frequency resource is used for AI model monitoring and/or AI model training.

3. The communication method according to claim 2, wherein the communication method further comprises:
receiving first capability information, wherein the first capability information indicates a time-frequency resource range supported by a terminal device, and the time-frequency resource range comprises the first time-frequency resource.

4. The communication method according to any one of claims 1 to 3, wherein the communication method further comprises:
receiving second capability information, wherein the second capability information indicates an AI preamble that can be generated by the terminal device; and
determining the first AI preamble from the AI preamble that can be generated by the terminal device.

5. The communication method according to claim 4, wherein a first AI preamble set is determined by using an AI model, the first AI preamble set comprises the AI preamble that can be generated by the terminal device, and the AI preamble that can be generated by the terminal device comprises the first AI preamble.

6. The communication method according to any one of claims 1 to 5, wherein the communication method further comprises:
receiving third capability information, wherein the third capability information indicates whether the terminal device supports auxiliary AI model monitoring and/or auxiliary AI model training; and
the sending the first indication information comprises:
sending the first indication information when the third capability information indicates that the terminal device supports auxiliary AI model monitoring and/or auxiliary AI model training.

7. The communication method according to any one of claims 1 to 6, wherein the communication method further comprises:
sending second configuration information, wherein the second configuration information indicates a first time domain offset and/or first frequency domain offset for sending the first AI preamble by the terminal device; and
the receiving the first signal comprising the first AI preamble comprises:
receiving, based on the first time domain offset and/or the first frequency domain offset, the first signal comprising the first AI preamble.

8. The communication method according to claim 7, wherein before the sending the second configuration information, the method further comprises:
receiving fourth capability information, wherein the fourth capability information indicates a time domain offset range and/or frequency domain offset range supported by the terminal device when sending the AI preambles, the time domain offset range comprises the first time domain offset, and the frequency domain offset range comprises the first frequency domain offset.

9. The communication method according to any one of claims 1 to 8, wherein the first indication information indicates the terminal device to send the first artificial intelligence AI preamble in a radio resource control RRC connected state.

10. A communication method, comprising:
receiving first indication information, wherein the first indication information indicates to send a first artificial intelligence AI preamble, and the first AI preamble is used for AI model monitoring and/or AI model training; and
sending, based on the first indication information, a first signal comprising the first AI preamble.

11. The communication method according to claim 10, wherein the communication method further comprises:
receiving first configuration information, wherein the first configuration information is used to configure a first time-frequency resource for sending the first AI preamble; and
the sending, based on the first indication information, the first signal comprising the first AI preamble comprises:
sending the first signal comprising the first AI preamble on the first time-frequency resource indicated by the first configuration information, wherein
the first time-frequency resource is used for AI model monitoring and/or AI model training.

12. The communication method according to claim 11, wherein the communication method further comprises:
sending first capability information, wherein the first capability information indicates a time-frequency resource range supported by a terminal device, and the time-frequency resource range comprises the first time-frequency resource.

13. The communication method according to any one of claims 10 to 12, wherein the communication method further comprises:
sending second capability information, wherein the second capability information indicates an AI preamble that can be generated by the terminal device, wherein
the AI preamble that can be generated by the terminal device comprises the first AI preamble.

14. The communication method according to claim 13, wherein a first AI preamble set is determined by using an AI model, the first AI preamble set comprises the AI preamble that can be generated by the terminal device, and the AI preamble that can be generated by the terminal device comprises the first AI preamble; and
the AI preamble comprised in the first AI preamble set is used for AI model monitoring and/or AI model training.

15. The communication method according to any one of claims 10 to 14, wherein before the receiving the first indication information, the communication method further comprises:
sending third capability information, wherein the third capability information further indicates whether the terminal device supports auxiliary AI model monitoring or auxiliary AI model training.

16. The communication method according to any one of claims 10 to 15, wherein the communication method further comprises:
receiving second configuration information, wherein the second configuration information indicates a first time domain offset and/or first frequency domain offset for sending the first AI preamble; and
the sending, based on the first indication information, the first signal comprising the first AI preamble comprises:
sending, based on the first time domain offset and/or the first frequency domain offset, the first signal comprising the first AI preamble.

17. The communication method according to claim 16, wherein the communication method further comprises:
sending fourth capability information, wherein the fourth capability information indicates a time domain offset range and/or frequency domain offset range supported by the terminal device when sending the AI preambles, wherein
the time domain offset range comprises the first time domain offset, and the frequency domain offset range comprises the first frequency domain offset.

18. The communication method according to any one of claims 10 to 17, wherein the first indication information indicates to send the first AI preamble in a radio resource control RRC connected state; and
the sending, based on the first indication information, the first signal comprising the first AI preamble comprises:
sending, in the RRC connected state based on the first indication information, the first signal comprising the first AI preamble.

19. A communication method, comprising:
receiving first configuration information, wherein the first configuration information is used to configure monitoring of information about artificial intelligence AI preamble sending; and
sending first information based on the first configuration information, wherein the first information comprises the information about AI preamble sending.

20. The communication method according to claim 19, wherein the first configuration information is used to configure monitoring of information about AI preamble sending in a first time window; and
the first information comprises the information about AI preamble sending in the first time window.

21. The communication method according to claim 20, wherein the first configuration information is used to configure monitoring of information about an AI preamble sending failure in the first time window; and
the first information comprises the information about the AI preamble sending failure in the first time window.

22. The communication method according to claim 21, wherein the first configuration information is used to configure monitoring of at least one of a quantity of AI preamble sending failures, an identifier of an AI preamble that fails to be sent, a sending time of an AI preamble that fails to be sent, or a transmit power of an AI preamble that fails to be sent in the first time window; and
the first information comprises the at least one of the quantity of AI preamble sending failures, the identifier of the AI preamble that fails to be sent, the sending time of the AI preamble that fails to be sent, or the transmit power of the AI preamble that fails to be sent in the first time window.

23. The communication method according to any one of claims 19 to 22, wherein the communication method further comprises:
receiving second configuration information, wherein the second configuration information is used to configure to send the first information upon N AI preamble sending failures; and
the sending the first information based on the first configuration information comprises:
sending the first information upon the N AI preamble sending failures, wherein
N is a positive integer.

24. The communication method according to claim 23, wherein the second configuration information is specifically used to configure to send, upon the N AI preamble sending failures, the first information after entering a radio resource control RRC connected state via a non-AI preamble; and
the sending the first information upon the N AI preamble sending failures comprises:
sending, upon the N AI preamble sending failures, the first information after entering the RRC connected state via the non-AI preamble.

25. The communication method according to any one of claims 19 to 22, wherein the communication method further comprises:
receiving a first request message; and
the sending the first information based on the first configuration information comprises:
sending the first information based on the first configuration information in response to the first request message.

26. The communication method according to any one of claims 19 to 22, wherein the communication method further comprises:
sending a second request message; and
receiving a response message of the second request message; and
the sending the first information based on the first configuration information comprises:
sending the first information based on the first configuration information and the response message of the second request message.

27. A communication method, comprising:
sending first configuration information, wherein the first configuration information is used to configure monitoring of information about artificial intelligence AI preamble sending; and
receiving first information sent based on the first configuration information, wherein the first information comprises the information about AI preamble sending.

28. The communication method according to claim 27, wherein the first configuration information is used to configure monitoring of information about AI preamble sending in a first time window, and the first information comprises the information about AI preamble sending in the first time window.

29. The communication method according to claim 28, wherein the first configuration information is used to configure monitoring of information about an AI preamble sending failure in the first time window, and the first information comprises the information about the AI preamble sending failure in the first time window.

30. The communication method according to claim 29, wherein the first configuration information is used to configure monitoring of at least one of a quantity of AI preamble sending failures, an identifier of an AI preamble that fails to be sent, a sending time of an AI preamble that fails to be sent, or a transmit power of an AI preamble that fails to be sent in the first time window; and
the first information comprises the at least one of the quantity of AI preamble sending failures, the identifier of the AI preamble that fails to be sent, the sending time of the AI preamble that fails to be sent, or the transmit power of the AI preamble that fails to be sent in the first time window.

31. The communication method according to any one of claims 27 to 30, wherein the communication method further comprises:
sending second configuration information, wherein the second configuration information is used to configure to send the first information upon N AI preamble sending failures, and N is a positive integer.

32. The communication method according to claim 31, wherein the second configuration information is used to configure to send, upon the N AI preamble sending failures, the first information after entering an RRC connected state via a non-AI preamble; and

33. The communication method according to any one of claims 27 to 30, wherein the communication method further comprises:
sending a first request message; and
the receiving the first information comprises:
receiving the first information sent based on the first request message.

34. The communication method according to any one of claims 27 to 33, wherein the communication method further comprises:
receiving a second request message; and
sending a response message of the second request message; and
the receiving the first information comprises:
receiving the first information based on the response message of the second request message.

35. A communication apparatus, wherein the communication apparatus performs the communication method according to any one of claims 1 to 9, implements the communication method according to any one of claims 10 to 18, implements the communication method according to any one of claims 19 to 26, or implements the communication method according to any one of claims 27 to 34.

36. A computer-readable storage medium, wherein the computer-readable storage medium stores a computer program; and when the computer program is run, the communication method according to any one of claims 1 to 9 is implemented, the communication method according to any one of claims 10 to 18 is implemented, the communication method according to any one of claims 19 to 26 is implemented, or the communication method according to any one of claims 27 to 34 is implemented.

37. A chip, comprising a processor, wherein the processor is connected to a memory, the memory is configured to store a computer program, and the processor is configured to execute the computer program stored in the memory, so that the chip performs the communication method according to any one of claims 1 to 9, implements the communication method according to any one of claims 10 to 18, implements the communication method according to any one of claims 19 to 26, or implements the communication method according to any one of claims 27 to 34.
